# EUROPEAN PATENT SPECIFICATION

(11) **EP 3 127 883 B1**
(45) Date of publication and mention of the grant of the patent: **19.10.2022**
(21) Application number: 15774358.4
(22) Date of filing: 31.03.2015
(51) Int. Cl.: B32B 17/10, B32B 27/18

(54) **INTERLAYER FOR LAMINATED GLASS, INTERLAYER FOR LUMINESCENT LAMINATED GLASS, AND LAMINATED GLASS**
ZWISCHENSCHICHT FÜR VERBUNDGLAS, ZWISCHENSCHICHT FÜR LEUCHTENDES VERBUNDGLAS UND VERBUNDGLAS
COUCHE INTERMÉDIAIRE POUR VERRE FEUILLETÉ, COUCHE INTERMÉDIAIRE POUR VERRE FEUILLETÉ LUMINESCENT ET VERRE FEUILLETÉ

(30) Priority: 31.03.2014 JP 2014074806; 31.03.2014 JP 2014074807
(43) Date of publication of application: 08.02.2017
(73) Proprietor: Sekisui Chemical Co., Ltd., Osaka-shi, Osaka 530-0047 (JP)
(72) Inventor: OOTA, Yuusuke, Koka-shi Shiga 528-8585 (JP); IZU, Yasuyuki, Koka-shi Shiga 528-8585 (JP)
(74) Representative: Cabinet Beau de Loménie
(86) International application number: PCT/JP2015/060221
(87) International publication number: WO 2015/152277

(56) References cited:
- WO-A1-2012/115197
- WO-A1-2013/124596
- WO-A1-2014/051140
- JP-A- 2003 327 455
- JP-A- 2010 274 585
- JP-A- 2014 024 313
- JP-A- 2014 505 645
- US-A1- 2010 233 453
- US-A1- 2013 252 001

## Description

### TECHNICAL FIELD

The first aspect of the present invention relates to an interlayer film for laminated glass, an interlayer film for luminescent laminated glass, and a laminated glass including the interlayer film for laminated glass, which are significantly suppressed while containing an aromatic compound such as a salicylic acid compound or a benzophenone compound.

The second aspect of the present invention relates to an interlayer film for laminated glass which enables display of high luminance images under irradiation with light and inhibits reduction in the luminance of images even after use for a long period of time, and a laminated glass including the interlayer film for laminated glass.

### BACKGROUND ART

Laminated glass has a variety of uses, such as in front, side and rear windshields of vehicles (e.g. automobiles) and windowpanes of aircraft, buildings, and the like, because it is a form of safety glass that is less likely to scatter even when shattered by external impact. An example of laminated glass is a laminated glass including at least a pair of glass sheets integrated through, for example, an interlayer film for laminated glass which contains a liquid plasticizer and a polyvinyl acetal resin.

A recent growing need is the development of a head-up display (HUD) that presents meters showing vehicle driving data (e.g. driving speed information) within a usual range of vision in the front windshield of a vehicle.

There have been known various types of HUDs. The most typical one is a HUD that is designed such that a display unit of an instrumental panel projects information (e.g. driving speed information) sent from a control unit onto a front windshield to enable a driver to view the information at a usual viewpoint, that is, within a usual range of vision in the front windshield.

An example of interlayer films for laminated glass used for a HUD is a wedge-shaped interlayer film for laminated glass with a predetermined wedge shape proposed in Patent Literature 1. This interlayer film can solve a HUDs' problem that a meter image displayed on a laminated glass appears double.

Patent Literature 1 also discloses a laminated glass that is partially free from the HUDs' problem that a meter image appears double. Yet, not the entire surface of the laminated glass is free from the double meter image problem.

Patent Literature 2 discloses a laminated glass including a laminate of an interlayer containing hydroxy terephthalate between two transparent plates. The laminated glass disclosed in Patent Literature 2 produces a high contrast image under irradiation with light.

Patent Literature 3 discloses an interlayer film for a laminated glass containing a polyvinyl acetal resin, an ultraviolet absorber such as a malonic acid ester compound, a plasticizer, an adhesion regulator such as a salt of an alkali or alkaline earth metal, and an antioxidant.

Patent Literature 4 discloses an intermediate film for a laminated glass comprising a laminate consisting of a layer (PVB layer) of a composition comprising polyvinyl butyral and a layer (EVA layer) of a composition comprising ethylene/vinyl acetate copolymer containing an organic peroxide, wherein the composition comprising polyvinyl butyral contains a benzophenone compound as an ultraviolet absorber.

Patent Literature 5 discloses a laminated glazing for information display, of the automobile windshield or architectural glazing type, comprising an assembly of at least two transparent sheets of inorganic glass or of a strong organic material, joined together by an interlayer of a thermoformable material or by multilayer foils incorporating such an interlayer, said glazing being characterized in that a luminophore material of the hydroxyterephthalate type, combined with an antioxidant additive, is integrated into said interlayer.

Patent Literature 6 discloses an interlayer film for a laminated glass containing a polyvinyl acetal, a light-emitting material having a terephthalic acid ester structure, and a potassium salt.

Patent Literature 7 discloses a thermoplastic sheet for producing a transparent glazing for a motor vehicle or a building, intended for displaying information, said sheet comprising a compound having an absorption band in the ultraviolet range such as 2-hydroxy-4-octyloxy-benzophenone, ethanediamide N-(2-ethoxyphenyl)-N'-(2-ethylphenyl), or 2-(2H-benzotriazol-2-yl)-p-cresol.

### CITATION LIST

### - Patent Literature

Patent Literature 1: JP H04-502525 T
Patent Literature 2: WO 2010/139889
Patent Literature 3 JP-A-2003-327455
Patent Literature 4: US-A-2010/0233453
Patent Literature 5: US-A-2013/0252001
Patent Literature 6: WO-A-2014/051140
Patent Literature 7: WO-A-2013/124596

### SUMMARY OF INVENTION

### - Technical Problem

The present inventors studied about use of aromatic compounds such as salicylic acid compounds and benzophenone compounds as luminescent materials to find out that the use of an aromatic compound such as a salicylic acid compound or a benzophenone compound as a luminescent material enables display of high contrast images under irradiation with light. However, they realized that an interlayer film for laminated glass containing such an aromatic compound as a luminescent material problematically suffers coloring. They also found out that such a problem is not a problem limited to the case where an aromatic compound is used as a luminescent material but a common problem in the use of a certain aromatic compound in production of an interlayer film for laminated glass.

The present inventors also studied about an interlayer film for laminated glass which includes a luminescent layer containing a thermoplastic resin and a luminescent material having a terephthalic acid ester structure to find out that use of a luminescent material having a terephthalic acid ester structure enables display of high contrast images under irradiation with light. A HUD including such an interlayer film for laminated glass can display high luminance images initially. However, the luminance of images displayed thereon is problematically lowered over time.

The first aspect of the present invention aims to provide an interlayer film for laminated glass, an interlayer film for luminescent laminated glass, and a laminated glass including the interlayer film for laminated glass which are significantly suppressed while containing an aromatic compound such as a salicylic acid compound or a benzophenone compound.

The second aspect of the present invention aims to provide an interlayer film for laminated glass which enables display of high luminance images under irradiation with light and inhibits reduction in the luminance of images even after use for a long period of time, and a laminated glass including the interlayer film for laminated glass.

### - Solution to problem

The first aspect of the present invention is defined in appended claim 1 and relates to an interlayer film for laminated glass containing: a thermoplastic resin; an aromatic compound of formula (1) and/or (2) as defined in appended claim 1 that has a structure capable of coordinating with a metal; an ultraviolet absorber having a benzotriazole structure; a potassium salt; and an antioxidant, the antioxidant being at least one antioxidant selected from the group consisting of a phenolic compound, a phosphoric acid compound, and a sulfur compound.

The first aspect of the present invention is specifically described in the following.

As a result of intensive studies, the present inventors found out that coloring of an interlayer film for laminated glass containing an aromatic compound such as a salicylic acid compound or a benzophenone compound is caused by reaction between the aromatic compound and a metal. The interlayer film for laminated glass contains a metal derived from impurities in a thermoplastic resin used as a raw material and a metal derived from a metal salt added as an adhesion modifier. Any of the aromatic compounds such as a salicylic acid compound or a benzophenone compound has a structure capable of coordinating with a metal, and therefore presumably reacts with a metal to cause coloring. Such coloring is accelerated by heating.

The present inventors made further intensive studies to find out that combination use with a specific antioxidant can inhibit such coloring, thereby completing the first aspect of the present invention.

The interlayer film for laminated glass of the first aspect of the present invention contains a thermoplastic resin. In the first aspect of the present invention, the thermoplastic resin serves as a binder resin.

Examples of the thermoplastic resin include polyvinylidene fluoride, polytetrafluoroethylene, vinylidene fluoride-propylene hexafluoride copolymers, polyethylene trifluoride, acrylonitrile-butadiene-styrene copolymers, polyesters, polyethers, polyamides, polycarbonates, polyacrylates, polymethacrylates, polyvinyl chloride, polyethylene, polypropylene, polystyrene, polyvinyl acetals, and ethylene-vinyl acetate copolymers. In particular, polyvinyl acetals are preferred.

The polyvinyl acetal is not particularly limited as long as it is obtained by acetalizing polyvinyl alcohol with an aldehyde, and is preferably polyvinyl butyral. Two or more kinds of polyvinyl acetals may be used in combination.

The lower limit of the degree of acetalization of the polyvinyl acetal is preferably 40 mol%, and the upper limit thereof is preferably 85 mol%. The lower limit is more preferably 60 mol%, and the upper limit is more preferably 75 mol%.

The lower limit of the hydroxy group content of the polyvinyl acetal is preferably 15 mol%, and the upper limit thereof is preferably 35 mol%. When the hydroxy group content is 15 mol% or higher, formation of the interlayer film for laminated glass is facilitated. When the hydroxy group content is 35 mol% or lower, handleability of the interlayer film for laminated glass is improved.

The degree of acetalization and the hydroxy group content can be determined in conformity with JIS K6728 "polyvinyl butyral Test Method".

The polyvinyl acetal can be prepared by acetalizing polyvinyl alcohol with an aldehyde. The polyvinyl alcohol is normally prepared by saponifying polyvinyl acetate. Polyvinyl alcohol commonly used has a degree of saponification of 70 to 99.8 mol%.

The lower limit of the degree of polymerization of the polyvinyl alcohol is preferably 500, and the upper limit thereof is preferably 4000. When the polyvinyl alcohol has a degree of polymerization of 500 or higher, the laminated glass to be obtained has higher penetration resistance. When the polyvinyl alcohol has a degree of polymerization of 4000 or lower, formation of the interlayer film for laminated glass is facilitated. The lower limit of the degree of polymerization of the polyvinyl alcohol is more preferably 1000, and the upper limit thereof is more preferably 3600.

The aldehyde is not particularly limited. Commonly, preferred is a C1-C10 aldehyde. The C1-C10 aldehyde is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Preferred among these are n-butyraldehyde, n-hexylaldehyde, and n-valeraldehyde, and more preferred is n-butyraldehyde. These aldehydes may be used alone, or in combination of two or more thereof.

The interlayer film for laminated glass according to the first aspect of the present invention contains an aromatic compound that has a structure capable of coordinating with a metal.

The aromatic compound that has a structure capable of coordinating with a metal includes a compound serving as an ultraviolet absorber or an antioxidant, in addition to a compound serving as a luminescent material.

The aromatic compound that has a structure capable of coordinating with a metal as used herein refers to an aromatic compound that has a substituent containing an unshared electron pair, such as a hydroxyl or carboxy group, and can capture metals with the substituent.

The aromatic compound having a structure capable of coordinating with a metal in the first aspect of the invention is a luminescent material, in the form of compounds having a structure represented by the formula (1) and compounds having a structure represented by the formula (2). Each of these may be used alone, or in combination of two or more thereof.

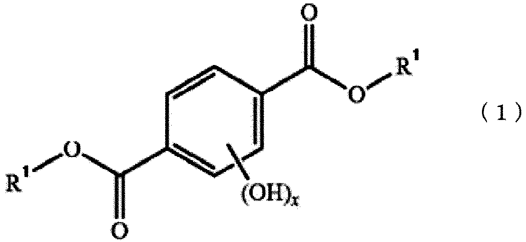

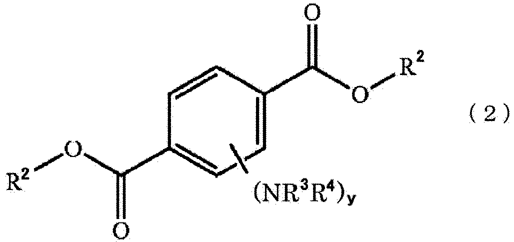

In the formula (1), R¹ is an organic group and x is 1, 2, 3, or 4. For higher transparency of the interlayer film for laminated glass, x is preferably 1 or 2, and the compound preferably has a hydroxy group at 2 or 5 position of the benzene ring, more preferably at 2 and 5 positions of the benzene ring.

The organic group of R¹ is preferably a hydrocarbon group, more preferably a C1-C10 hydrocarbon group, still more preferably a C1-C5 hydrocarbon group, particularly preferably a C1-C3 hydrocarbon group. The hydrocarbon group is preferably an alkyl group.

Examples of the compound having a structure represented by the formula (1) include diethyl-2, 5-dihydroxyterephthalate and dimethyl-2,5-dihydroxyterephthalate.

In the formula (2), R² is an organic group, R³ and R⁴ each are a hydrogen atom or an organic group, and y is 1, 2, 3, or 4.

The organic group of R² is preferably a hydrocarbon group, more preferably a C1-C10 hydrocarbon group, still more preferably a C1-C5 hydrocarbon group, particularly preferably C1-C3 hydrocarbon group. The hydrocarbon group is preferably an alkyl group.

In the formula (2), NR³R⁴ is an amino group. R³ and R⁴ each are preferably a hydrogen atom. The benzene ring in the compound having a structure represented by the formula (2) may have the amino group (s) at the position (s) of one hydrogen atom, two hydrogen atoms, three hydrogen atoms, or four hydrogen atoms among hydrogen atoms of the benzene ring.

Examples of the compound having a structure represented by the formula (2) include diethyl-2,5-diaminoterephthalate.

The amount of the aromatic compound having a structure capable of coordinating with a metal is not particularly limited. For example, in the application as a luminescent material, the lower limit of the amount is preferably 0.001 parts by weight and the upper limit thereof is preferably 10 parts by weight based on 100 parts by weight of the thermoplastic resin. When the amount of the aromatic compound having a structure capable of coordinating with a metal is 0.001 parts by weight or more, still higher contrast images can be displayed under irradiation with light. When the amount of the aromatic compound having a structure capable of coordinating with a metal is 10 parts by weight or less, the interlayer film for laminated glass has still higher transparency. More preferably, the lower limit of the amount of the aromatic compound having a structure capable of coordinating with a metal is 0.005 parts by weight and the upper limit thereof is 5 parts by weight. Still more preferably, the lower limit is 0.01 parts by weight and the upper limit is 2 parts by weight. Particularly preferably, the lower limit is 0.1 parts by weight and the upper limit is 1.5 parts by weight.

The interlayer film for laminated glass of the first aspect of the present invention contains at least one antioxidant selected from the group consisting of phenolic compounds, phosphoric acid compounds, and sulfur compounds. Addition of any of these antioxidants enables production of an interlayer film for laminated glass significantly suppressed.

Examples of the phenolic compound include 2, 6-di-t-butyl -p-cresol (BHT), butylated hydroxyanisole(BHA), 2,6-di-t-butyl-4-ethylphenol, stearyl-β-(3,5-di-t-butyl -4-hydroxyphenyl)propionate, 2,2'-methylenebis-(4-methyl -6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl) propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl) benzene, bis(3,3'-t-butylphenol)butyric acid glycol ester, and pentaerythritol tetrakis[3-(3,5-di-tert-butyl-4-hydroxy phenyl)propionate] .

Examples of the phosphoric acid compound include tris nonylphenyl phosphite, tridecyl phosphite, 2-ethyl-2-butylpropylene-4,6-tri-tert-butylphenol phosphite, 9,10-dihydro-9-oxa-10-phosphaphenanthrene-10-oxide, tetra(tridecyl)isopropylidenediphenol diphosphite, and tris[2-tert-butyl-4-(3-tert-hydroxy-5-methylphenylthio)-5 -methylphenyl]phosphite.

Examples of the sulfur compound include: dialkyl thiodipropionates such as dilauryl thiodipropionate, dimyristyl thiodipropionate, and distearyl thiodipropionate; and β-alkyl mercaptopropionate esters of polyols such as pentaerythritol tetra(β-dodecylmercaptopropionate).

In particular, phenolic compounds are preferred among the above antioxidants for its higher coloring inhibition.

In the interlayer film for laminated glass according to the first aspect of the present invention, the lower limit of the amount added of the antioxidant is preferably 0.05 parts by weight and the upper limit thereof is preferably 400 parts by weight based on 1 part by weight of the aromatic compound having a structure capable of coordinating with a metal. When the amount of the antioxidant is within the above range, coloring of the interlayer film for laminated glass can be surely inhibited.

The interlayer film for laminated glass according to the first aspect of the present invention contains a potassium salt as an adhesion modifier.

With an aim of adjusting the adhesion between an interlayer film for laminated glass and glass, the interlayer film commonly contains a compound that contains a magnesium element as an adhesion modifier. However, use of the aromatic compound having a structure capable of coordinating with a metal and a compound containing a magnesium element may cause discoloration of the interlayer film for laminated glass. In contrast, use of a potassium salt can inhibit discoloration of the interlayer film for laminated glass, while facilitating control of the adhesion between the interlayer film for laminated glass and glass.

The potassium salt is not particularly limited, and is preferably a potassium salt of a C1-C16 organic acid, more preferably a potassium salt of a C2-C16 organic acid, still more preferably a potassium salt of a C1-C16 carboxylic acid, particularly preferably a potassium salt of a C2-C16 carboxylic acid. The potassium salt of a C1-C16 carboxylic acid is not particularly limited, and examples thereof include potassium formate, potassium acetate, potassium propionate, potassium 2-ethylbutanoate, and potassium 2-ethylhexanoate. The potassium salt may be potassium acetate, potassium propionate, potassium 2-ethylbutanoate, or potassium 2-ethylhexanoate. The C1-C16 carboxylic acid is preferably a carboxylic acid having a carbon number of 12 or smaller, more preferably a carboxylic acid having a carbon number of 10 or smaller, still more preferably a carboxylic acid having a carbon number of 8 or smaller.

The amount of the potassium salt is not particularly limited, and the lower limit of the amount is preferably 0.001 parts by weight and the upper limit thereof is preferably 0.5 parts by weight based on 100 parts by weight of the thermoplastic resin. When the amount of the potassium salt is 0.001 parts by weight or more, the laminated glass has higher penetration resistance. When the amount of the potassium salt is 0.5 parts by weight or less, the interlayer film for laminated glass has higher transparency. More preferably, the lower limit of the amount of the potassium salt is 0.015 parts by weight, and the upper limit thereof is 0.25 parts by weight. Still more preferably, the lower limit is 0.02 parts by weight, and the upper limit is 0.2 parts by weight. Particularly preferably, the lower limit is 0.025 parts by weight and the upper limit is 0.1 parts by weight.

For further effective inhibition of discoloration of the interlayer film for laminated glass according to the first aspect of the present invention, the amount of the potassium element is preferably 400 ppm or less, more preferably 300 ppm or less, still more preferably 250 ppm or less, particularly preferably 200 ppm or less, most preferably 180 ppm or less. For higher moisture resistance of the interlayer film for laminated glass to be obtained, the amount of the potassium element is most preferably 100 ppm or less. The potassium element may be contained as potassium derived from a potassium salt, and may be contained as potassium derived from a neutralizer used in synthesis of a thermoplastic resin such as a polyvinyl acetal. The lower limit of the amount of the potassium element in the interlayer film for laminated glass according to the first aspect of the present invention is preferably 30 ppm, more preferably 40 ppm, still more preferably 80 ppm, particularly preferably 120 ppm.

The interlayer film for laminated glass according to the first aspect of the present invention may contain a magnesium salt as an adhesion modifier to the extent that the effect of the first aspect of the present invention is not impaired. The use of the magnesium salt further facilitates control of the adhesion between the interlayer film for laminated glass and glass. The magnesium salt is not particularly limited, and is preferably a magnesium salt of a C2-C16 organic acid, more preferably a magnesium salt of a C2-C16 carboxylic acid. The magnesium salt of a C2-C16 carboxylic acid is not particularly limited, and examples thereof include magnesium acetate, magnesium propionate, magnesium 2-ethylbutanoate, and magnesium 2-ethylhexanoate. For still further facilitation of control of the adhesion between the interlayer film for laminated glass and glass, the magnesium salt of a C2-C16 carboxylic acid is preferably magnesium acetate.

The amount of the magnesium salt is not particularly limited. The lower limit of the amount is preferably 0.02 parts by weight and the upper limit thereof is preferably 0.5 parts by weight based on 100 parts by weight of the thermoplastic resin. When the amount of the magnesium salt is 0.02 parts by weight or more, the laminated glass has higher penetration resistance. When the amount of the magnesium salt is 0.5 parts by weight or less, the interlayer film for laminated glass has higher transparency. More preferably, the lower limit of the amount of the magnesium salt is 0.03 parts by weight, and the upper limit thereof is 0.2 parts by weight. Still more preferably, the lower limit is 0.04 parts by weight and the upper limit is 0.1 parts by weight.

For still further facilitation of control of the adhesion of the interlayer film for laminated glass according to the first aspect of the present invention and still effective inhibition of discoloration of the interlayer film for laminated glass according to the first aspect of the present invention, the amount of the magnesium element is preferably 80 ppm or less. The magnesium element may be contained as magnesium derived from the magnesium salt, and may be contained as magnesium derived from a neutralizer used in synthesis of a thermoplastic resin such as a polyvinyl acetal. The lower limit of the amount of the magnesium element in the interlayer film for laminated glass is preferably 0 ppm. More preferably, the upper limit thereof is 75 ppm and the lower limit is 20 ppm. Still more preferably, the upper limit is 70 ppm and the lower limit is 30 ppm. The amounts of the potassium element and the magnesium element can be determined using an ICP emission analyzer ("ICPE-9000" produced by Shimadzu Corporation).

For further effective inhibition of discoloration of the interlayer film for laminated glass, the concentration of a lithium element in the interlayer film for laminated glass according to the first aspect of the present invention is preferably 25 ppm or lower. More preferably, the lower limit of the concentration of the lithium element in the interlayer film for laminated glass is 0 ppm, and the upper limit thereof is 20 ppm. Still more preferably, the lower limit is 1 ppm and the upper limit is 10 ppm or less.

The interlayer film for laminated glass according to the first aspect of the present invention preferably further contains a dispersant. The use of a dispersant can inhibit aggregation of the aromatic compound having a structure capable of coordinating with a metal, leading to further uniform luminescence. The dispersant used may be, for example, a compound having a sulfonic acid structure such as linear alkyl benzene sulfonate; a compound having an ester structure such as diester compounds, ricinoleic acid alkyl esters, phthalic acid esters, adipic acid esters, sebacic acid esters, and phosphoric acid esters; a compound having an ether structure such as polyoxyethylene glycols, polyoxypropylene glycols, and alkyl phenyl-polyoxyethylene-ethers; a compound having a carboxylic acid structure such as polycarboxylic acids; a compound having an amine structure such as laurylamine, dimethyllaurylamine, oleyl propylenediamine, polyoxyethylene secondary amine, polyoxyethylene tertiary amine, and polyoxyethylene diamine; a compound having a polyamine structure such as polyalkylene polyamine alkylene oxide; a compound having an amide structure such as oleic acid diethanolamide and fatty acid alkanol amide; and a compound having a high-molecular-weight amide structure such as polyvinylpyrrolidone and polyester acid amidoamine salt. Also, the dispersant used may be a high-molecular-weight dispersant such as polyoxyethylene alkyl ether phosphoric acid (salt), high-molecular-weight polycarboxylic acids, and condensed ricinoleic acid esters. The high-molecular-weight dispersant is defined as a dispersant having a molecular weight of 10,000 or higher.

When the dispersant is used, the lower limit of the amount of the dispersant is preferably 1 part by weight and the upper limit thereof is preferably 50 parts by weight based on 100 parts by weight of the aromatic compound having a structure capable of coordinating with a metal in the interlayer film for laminated glass. When the amount of the dispersant is within the above range, the aromatic compound having a structure capable of coordinating with a metal can be uniformly dispersed in the interlayer film for laminated glass. More preferably, the lower limit of the amount of the dispersant is 3 parts by weight, and the upper limit thereof is 30 parts by weight. Still more preferably, the lower limit is 5 parts by weight and the upper limit is 25 parts by weight.

The interlayer film for laminated glass according to the first aspect of the present invention may further contain a plasticizer, if needed. The plasticizer is not particularly limited, and examples thereof include organic ester plasticizers such as monobasic organic acid esters and polybasic organic acid esters, and phosphoric acid plasticizers such as organophosphate plasticizers and organophosphite plasticizers. The plasticizer is preferably a liquid plasticizer.

The monobasic organic acid esters are not particularly limited, and examples thereof include glycol esters obtained by a reaction between a glycol (e.g., triethylene glycol, tetraethylene glycol, tripropylene glycol) and a monobasic organic acid (e.g., butyric acid, isobutyric acid, caproic acid, 2-ethylbutyric acid, heptanoic acid, n-octylic acid, 2-ethylhexanoic acid, pelargonic acid (n-nonylic acid), decylic acid). In particular, preferred are triethylene glycol dicaproic acid ester, triethylene glycol di-2-ethylbutyric acid ester, triethylene glycol di-n-octylic acid ester, and triethylene glycol di-2-ethylhexanoate.

The polybasic organic acid esters are not particularly limited, and examples thereof include ester compounds of a polybasic organic acid (e.g., adipic acid, sebacic acid, azelaic acid) with a C4-C8 linear or branched alcohol. In particular, preferred are dibutyl sebacic acid ester, dioctyl azelaic acid ester, and dibutyl carbitol adipic acid ester.

The organic ester plasticizers are not particularly limited, and examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexylcyclohexyl adipate, diisononyl adipate, heptylnonyl adipate, dibutyl sebacate, oil-modified sebacic alkyds, mixtures of phosphoric acid esters and adipic acid esters, adipic acid esters, mixed type adipic acid esters prepared from C4-C9 alkyl alcohols and C4-C9 cyclic alcohols, C6-C8 adipic acid esters such as hexyl adipate.

The organophosphate plasticizer is not particularly limited, and examples thereof include tributoxyethyl phosphate, isodecylphenyl phosphate, and triisopropyl phosphate.

Among these, the plasticizer is preferably at least one selected from the group consisting of dihexyl adipate (DHA), triethylene glycol di-2-ethylhexanoate (3GO), tetraethylene glycol di-2-ethylhexanoate (4GO), triethylene glycol di-2-ethylbutyrate (3GH), tetraethylene glycol di-2-ethylbutyrate (4GH), tetraethylene glycol di-n-heptanoate (4G7), and triethylene glycol di-n-heptanoate (3G7) .

For less hydrolysis, the plasticizer contains preferably triethylene glycol di-2-ethylhexanoate (3GO), triethylene glycol di-2-ethylbutyrate (3GH), tetraethylene glycol di-2-ethylhexanoate (4GO), or dihexyl adipate (DHA), more preferably tetraethylene glycol di-2-ethylhexanoate (4GO) or triethylene glycol di-2-ethylhexanoate (3GO), still more preferably triethylene glycol di-2-ethylhexanoate.

The amount of the plasticizer in the interlayer film for laminated glass according to the first aspect of the present invention is not particularly limited. Preferably, the lower limit thereof is 20 parts by weight and the upper limit thereof is 80 parts by weight based on 100 parts by weight of the thermoplastic resin. When the amount of the plasticizer is 20 parts by weight or more, the interlayer film for laminated glass has a lower melt viscosity, facilitating formation of the interlayer film for laminated glass. When the amount of the plasticizer is 80 parts by weight or less, the interlayer film for laminated glass has higher transparency. More preferably, the lower limit of the amount of the plasticizer is 30 parts by weight and the upper limit thereof is 70 parts by weight. Still more preferably the lower limit is 35 parts by weight and the upper limit is 63 parts by weight.

The interlayer film for laminated glass according to the first aspect of the present invention contains an ultraviolet absorber having a benzotriazole structure and may contain, if needed, other conventionally known additives such as ultraviolet absorbers, light stabilizers, antistatic agents, blue pigments, blue dyes, green pigments, and green dyes.

Examples of the ultraviolet absorbers include compounds having a malonic acid ester structure, compounds having an oxanilide structure, compounds having a benzotriazole structure, compounds having a benzophenone structure, compounds having a triazine structure, compounds having a benzoate structure, and compounds having a hindered amine structure.

As in the second aspect of the present invention, a benzotriazole ultraviolet absorber is used in the first aspect of the invention, and the amount thereof is preferably 0.05 to 10 parts by weight based on 1 part by weight of the aromatic compound having a structure capable of coordinating with a metal. Such an interlayer film for laminated glass according to the first aspect of the present invention can, when used as an interlayer film for luminescent laminated glass, display high luminance images under irradiation with light and can inhibit reduction in the luminance of images even after use for a long period of time.

The interlayer film for laminated glass according to the first aspect of the present invention is preferably used as an interlayer film for luminescent laminated glass. The present invention also encompasses an interlayer film for luminescent laminated glass including the interlayer film for laminated glass according to the first aspect of the present invention.

The interlayer film for luminescent laminated glass according to the first aspect of the present invention becomes luminous under irradiation with light having a specific wavelength. Such luminescent properties enable display of information at a high luminance.

Examples of a device for irradiation with light having a specific wavelength include a spot light source (LC-8, Hamamatsu Photonics K.K.), a xenon flash lamp (CW lamp, Heraeus Holding), and a black light (Carry Hand, Iuchi Seieido Co., Ltd.) .

The interlayer film for luminescent laminated glass according to the first aspect of the present invention may be a monolayer interlayer film. Alternatively, it may be a multilayer interlayer film including the interlayer film for laminated glass according to the first aspect of the present invention as a luminescent layer and a first resin layer provided on one surface of the luminescent layer.

The luminescent layer may be provided on the entire surface or part of the surface of the interlayer film for luminescent laminated glass according to the first aspect of the present invention. The luminescent layer may be provided on the entire surface or part of the surface in the plane direction vertical to the thickness direction of the interlayer film for luminescent laminated glass according to the first aspect of the present invention. When the luminescent layer is provided only on a part of the surface, the part serves as a luminescent area and parts other than the part serve as non-luminescent areas. Information can be displayed only in the luminescent area.

In the interlayer film for luminescent laminated glass according to the first aspect of the present invention, a first resin layer may be laminated on one surface of the luminescent layer. The first resin layer contains preferably a polyvinyl acetal, more preferably a polyvinyl acetal and a plasticizer, still more preferably a polyvinyl acetal, a plasticizer, and an adhesion modifier. In addition to the luminescent layer and the first resin layer, other layer (s) may be further laminated. Examples of the other layer(s) include layers containing thermoplastic resins such as polyethylene terephthalate and polyvinyl acetals. The other layer(s) may be a UV shielding layer containing an ultraviolet absorber. As the ultraviolet absorber contained in the UV shielding layer, the ultraviolet absorber contained in the luminescent layer may be used.

As the polyvinyl acetal contained in the first resin layer, the polyvinyl acetal contained in the luminescent layer may be used. The polyvinyl acetal contained in the first resin layer may be the same as or different from the polyvinyl acetal contained in the luminescent layer. The plasticizer contained in the first resin layer may be, when the luminescent layer contains a plasticizer, the same as or different from the plasticizer contained in the luminescent layer.

The first resin layer preferably contains an adhesion modifier. The adhesion modifier is not particularly limited, and is preferably a metal salt. The adhesion modifier is at least one metal salt selected from the group consisting of alkali metal salts, alkaline earth metal salts, and magnesium salts. The metal salt preferably contains at least one metal selected from potassium and magnesium. The metal salt is more preferably an alkali metal salt of a C2-C16 organic acid or an alkaline earth metal salt of a C2-C16 organic acid, still more preferably a magnesium salt of a C2-C16 carboxylic acid or a potassium salt of a C2-C16 carboxylic acid. The magnesium salt of a C2-C16 carboxylic acid and the potassium salt of a C2-C16 carboxylic acid are not particularly limited, and examples thereof include magnesium acetate, potassium acetate, magnesium propionate, potassium propionate, magnesium 2-ethylbutanoate, potassium 2-ethylbutanoate, magnesium 2-ethylhexanoate, and potassium 2-ethylhexanoate.

The amount of the adhesion modifier is not particularly limited. The lower limit is preferably 0.0005 parts by weight and the upper limit is preferably 0.05 parts by weight based on 100 parts by weight of the polyvinyl acetal. When the amount of the adhesion modifier is 0.0005 parts by weight or more, the laminated glass has higher penetration resistance. When the amount of the adhesion modifier is 0.05 parts by weight or less, the interlayer film for laminated glass has higher transparency. The lower limit of the amount of the adhesion modifier is more preferably 0.002 parts by weight and the upper limit thereof is more preferably 0.02 parts by weight.

For higher moisture resistance of the first resin layer, the total amount of the alkali metal, the alkaline earth metal, and the magnesium in the first resin layer is preferably 300 ppm or less. The alkali metal, the alkaline earth metal, and the magnesium may be contained as a metal derived from the adhesion modifier or a metal derived from a neutralizer used in synthesis of the polyvinyl acetal. The total amount of the alkali metal, the alkaline earth metal, and the magnesium in the first resin layer is more preferably 200 ppm or less, still more preferably 150 ppm or less, particularly preferably 100 ppm or less.

When the interlayer film for luminescent laminated glass according to the first aspect of the present invention is required to have heat insulation properties, either one or both of the luminescent layer and the first resin layer may contain a heat ray absorber. Alternatively, a heat ray shielding layer containing a heat ray absorber may be further laminated, in addition to the luminescent layer and the first resin layer.

The heat ray absorber is not particularly limited as long as it can shield infrared rays, and is preferably at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

The interlayer film for luminescent laminated glass according to the first aspect of the present invention may further have a sound insulation layer with an aim of improving the sound insulation properties. One of the luminescent layer and the first resin layer may be imparted with sound insulation properties to serve as a sound insulation layer. Alternatively, a sound insulation layer may be further laminated, in addition to the luminescent layer and the first resin layer.

The sound insulation layer is, for example, a layer containing the plasticizer in an amount of 50 to 80 parts by weight based on 100 parts by weight of the thermoplastic resin. The sound insulation layer contains preferably a polyvinyl acetal, more preferably polyvinyl butyral. The polyvinyl acetal contained in the sound insulation layer preferably has a hydroxy group content within a range of 20 to 28 mol%. The polyvinyl acetal contained in the sound insulation layer may be polyvinyl acetal A having an acetyl group content of 8 to 30 mol%, polyvinyl acetal B having an acetyl group content of more than 0 mol% but less than 5 mol% and having a degree of acetalization of 70 to 85 mol%, or polyvinyl acetal C having an acetyl group content of 5 mol% or more but less than 8 mol% and having a degree of acetalization of 65 to 80 mol%.

The interlayer film for luminescent laminated glass according to the first aspect of the present invention preferably includes the luminescent layer (surface layer), the first resin layer (intermediate layer), and the luminescent layer (surface layer) laminated in the stated order. When the luminescent layer is used as a surface layer of the interlayer film for luminescent laminated glass, the obtained interlayer film for laminated glass enables display of high contrast images and control of adhesion while inhibiting discoloration. In addition, when the first resin layer is imparted with sound insulation properties, the interlayer film for luminescent laminated glass has higher sound insulation properties.

With an aim of imparting the sound insulation properties to the interlayer film for luminescent laminated glass according to the first aspect of the present invention, the amount (hereafter, also referred to as amount X) of the plasticizer contained in the first resin layer based on 100 parts by weight of the thermoplastic resin contained in the first resin layer is preferably larger than the amount (hereafter, also referred to as amount Y) of the plasticizer contained in the luminescent layer based on 100 parts by weight of the thermoplastic resin contained in the luminescent layer. The amount X is larger than the amount Y preferably by 5 parts by weight or more, more preferably by 10 parts by weight or more, still more preferably by 15 parts by weight or more. For higher penetration resistance of the interlayer film for luminescent laminated glass, the amount X and the amount Y have a difference of preferably 50 parts by weight or less, more preferably 40 parts by weight or less, still more preferably 35 parts by weight or less. The difference between the amount X and the amount Y is calculated based on the equation: (Difference between the amount X and the amount Y) = (The amount X - the amount Y).

When the luminescent layer and the first resin layer each contain the polyvinyl acetal and the plasticizer and the luminescent layer is laminated on one surface of the first resin layer and on the other surface opposite to the one surface of the first resin layer, the polyvinyl acetal contained in the first resin layer preferably has a hydroxy group content (hereafter, also referred to as hydroxy group content X) smaller than the hydroxy group content (hereafter, also referred to as hydroxy group content Y) of the polyvinyl acetal contained in the luminescent layer. When the hydroxy group content X is smaller than the hydroxy group content Y, migration of the plasticizer contained in the first resin layer to the luminescent layer can be inhibited. As a result, the interlayer film for laminated glass has higher sound insulation properties.

The hydroxy group content X is smaller than the hydroxy group content Y more preferably by 1 mol% or more, still more preferably by 3 mol% or more, particularly preferably by 5 mol% or more. For facilitation of formation of the interlayer film for laminated glass, the upper limit of the difference between the hydroxy group content X and the hydroxy group content Y is preferably 20 mol%, more preferably 15 mol%, still more preferably 12 mol%, particularly preferably 10 mol%. The difference between the hydroxy group content X and the hydroxy group content Y is calculated based on the equation: (Difference between the hydroxy group content X and the hydroxy group content Y) = (the hydroxy group content Y - the hydroxy group content X).

For the purpose of inhibiting migration of the plasticizer from the first resin layer to the luminescent layer or migration of the aromatic compound having a structure capable of coordinating with a metal from the luminescent layer to the first resin layer, a layer for inhibiting migration of the plasticizer or the aromatic compound having a structure capable of coordinating with a metal may be provided between the luminescent layer and the first resin layer. Examples of the layer for inhibiting migration include a resin layer containing a polyalkylene terephthalate such as polyethylene terephthalate.

The lower limit of the hydroxy group content X is preferably 10 mol%, more preferably 15 mol%, still more preferably 18 mol%, particularly preferably 20 mol%. The upper limit of the hydroxy group content X is preferably 32 mol%, more preferably 30 mol%, still more preferably 28 mol%, particularly preferably 25 mol%. When the hydroxy group content X satisfies the lower limit, the interlayer film for luminescent laminated glass has higher penetration resistance. When the hydroxy group content X satisfies the upper limit, formation of the first resin layer is facilitated. The lower limit of the hydroxy group content Y is preferably 26 mol%, more preferably 28 mol%, still more preferably 30 mol%. The upper limit thereof is preferably 40 mol%, more preferably 36 mol%, still more preferably 34 mol%, particularly preferably 32 mol%. When the hydroxy group content Y satisfies the lower limit, the interlayer film for luminescent laminated glass has higher penetration resistance. When the hydroxy group content Y satisfies the upper limit, formation of the luminescent layer is facilitated.

The interlayer film for laminated glass or the interlayer film for luminescent laminated glass according to the first aspect of the present invention may be produced by any method. For example, the interlayer film for laminated glass may be produced using a resin composition containing a plasticizer solution that is prepared by mixing the plasticizer, the aromatic compound having a structure capable of coordinating with a metal, and the antioxidant, and the thermoplastic resin. The interlayer film for laminated glass or the interlayer film for luminescent laminated glass is preferably produced by mixing the obtained resin composition well in an extruder and extruding the composition therefrom. For another example, a multilayer interlayer film having a luminescent layer, a first resin layer, and a luminescent layer may be produced by co-extruding a resin composition containing a plasticizer solution that is prepared by mixing the plasticizer, the aromatic compound having a structure capable of coordinating with a metal, and the antioxidant, and the thermoplastic resin, with a resin composition containing the thermoplastic resin and the plasticizer.

The present invention also encompasses a laminated glass including a pair of glass sheets and the interlayer film for laminated glass or the interlayer film for luminescent laminated glass according to the first aspect of the present invention provided between the pair of glass sheets.

The glass sheets may be commonly used transparent plate glass. Examples thereof include inorganic glass such as float plate glass, polished plate glass, molded plate glass, wired glass, wire-reinforced plate glass, colored plate glass, heat-absorbing glass, heat-reflecting glass, and green glass. Also usable is UV light-shielding glass in which a UV light-shielding coating is formed on the surface of glass. However, such glass is preferably used as a glass sheets on a side opposite to the side irradiated with light having a specific wavelength. Moreover, organic plastic sheets such as polyethylene terephthalate, polycarbonate, or polyacrylate sheets may also be used.

As the glass sheets, two or more kinds of glass sheets may be used. Exemplary cases thereof include a laminated glass in which the interlayer film for laminated glass or the interlayer film for luminescent laminated glass according to the first aspect of the present invention is sandwiched between a transparent float plate glass and a colored glass sheet such as green glass . Moreover, as the glass sheets, two or more kinds of glass sheets different in the thickness may be used.

The second aspect of the present invention is defined in appended claim 5 and relates to an interlayer film for laminated glass including a luminescent layer that contains a thermoplastic resin, a luminescent material having a terephthalic acid ester structure, an antioxidant and a benzotriazole ultraviolet absorber, the luminescent layer containing the benzotriazole ultraviolet absorber in an amount of 0.05 to 10 parts by weight based on 1 part by weight of the luminescent material having a terephthalic acid ester structure. The antioxidant is at least one phenolic compound, phosphoric acid compound, and/or sulfur compound.

The second aspect of the present invention is specifically described in the following.

As a result of intensive studies, the present inventors found out that, in the case of using an interlayer film for laminated glass having a luminescent layer that contains a thermoplastic resin and a luminescent material having a terephthalic acid ester structure for a HUD, the luminance is lowered by UV light. The interlayer film for laminated glass is kept to be exposed to strong sunlight due to applications thereof. During such exposure, the luminescent material having a terephthalic acid ester structure is denatured or decomposed due to the UV light, presumably leading to reduction in the luminance.

Use of an ultraviolet absorber in combination is considered to inhibit such an influence by UV light. However, if the luminescent layer contains an ultraviolet absorber, the initial luminance may be lowered. The present inventors made intensive studies to find out that, only in the case where a luminescent material having a terephthalic acid ester structure is blended with a benzotriazole ultraviolet absorber at a specific ratio, the initial luminance is not lowered and reduction in the luminance over time can be inhibited, thereby completing the second aspect of the present invention.

The interlayer film for laminated glass according to the second aspect of the present invention may be a monolayer interlayer film having the luminescent layer alone or a multilayer interlayer film having the luminescent layer and a first resin layer provided on one surface of the luminescent layer.

The luminescent layer contains a thermoplastic resin. In the second aspect of the present invention, the thermoplastic resin serves as a binder resin.

Examples of the thermoplastic resin include polyvinylidene fluoride, polytetrafluoroethylene, vinylidene fluoride-propylene hexafluoride copolymers, polyethylene trifluoride, acrylonitrile-butadiene-styrene copolymers, polyesters, polyethers, polyamides, polycarbonates, polyacrylates, polymethacrylates, polyvinyl chloride, polyethylene, polypropylene, polystyrene, polyvinyl acetals, and ethylene-vinyl acetate copolymers. In particular, polyvinyl acetals are preferred.

The polyvinyl acetal is not particularly limited as long as it is obtained by acetalizing polyvinyl alcohol with an aldehyde, and is preferably polyvinyl butyral. Two or more kinds of polyvinyl acetals may be used in combination.

The lower limit of the degree of acetalization of the polyvinyl acetal is preferably 40 mol%, and the upper limit thereof is preferably 85 mol%. The lower limit is more preferably 60 mol% and the upper limit is more preferably 75 mol%.

The lower limit of the hydroxy group content of the polyvinyl acetal is preferably 15 mol%, and the upper limit thereof is preferably 35 mol%. When the hydroxy group content is 15 mol% or greater, formation of the interlayer film for laminated glass is facilitated. When the hydroxy group content is 35 mol% or lower, handleability of the interlayer film for laminated glass is improved.

The degree of acetalization and the hydroxy group content can be determined in conformity with JIS K6728 "polyvinyl butyral Test Method".

The polyvinyl acetal can be prepared by acetalizing polyvinyl alcohol with an aldehyde. The polyvinyl alcohol is normally prepared by saponifying polyvinyl acetate. Polyvinyl alcohol commonly used has a degree of saponification of 70 to 99.8 mol%.

The lower limit of the degree of polymerization of the polyvinyl alcohol is preferably 500, and the upper limit thereof is preferably 4000. When the polyvinyl alcohol has a degree of polymerization of 500 or higher, the laminated glass to be obtained has higher penetration resistance. When the polyvinyl alcohol has a degree of polymerization of 4000 or lower, formation of the interlayer film for laminated glass is facilitated. The lower limit of the degree of polymerization of the polyvinyl alcohol is more preferably 1000, and the upper limit thereof is more preferably 3600.

The aldehyde is not particularly limited. Commonly, preferred is a C1-C10 aldehyde. The C1-C10 aldehyde is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Preferred among these are n-butyraldehyde, n-hexylaldehyde, and n-valeraldehyde, and more preferred is n-butyraldehyde. These aldehydes may be used alone, or in combination of two or more thereof.

The luminescent layer contains the luminescent material having a terephthalic acid ester structure.

The luminescent material having a terephthalic acid ester structure becomes luminous under irradiation with light. The light is not particularly limited as long as it can excite the luminescent material having a terephthalic acid ester structure so that it becomes luminous, and examples thereof include UV light and infrared rays.

Examples of the luminescent material having a terephthalic acid ester structure include compounds having a structure represented by the formula (1) and compounds having a structure represented by the formula (2). Each of these may be used alone, or in combination of two or more thereof.

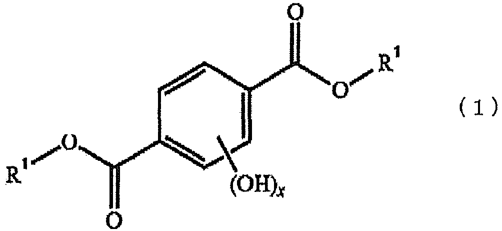

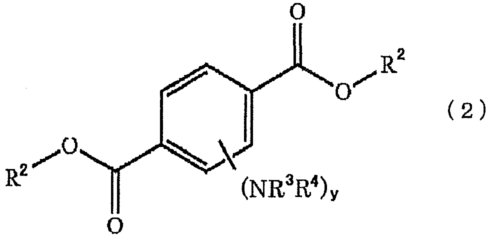

In the formula (1), R¹ is an organic group and x is 1, 2, 3, or 4. For higher transparency of interlayer film for the laminated glass, x is preferably 1 or 2, and the compound has a hydroxy group more preferably at 2 or 5 position of the benzene ring, still more preferably at 2 and 5 positions of the benzene ring.

The organic group of R¹ is preferably a hydrocarbon group, more preferably a C1-C10 hydrocarbon group, still more preferably a C1-C5 hydrocarbon group, particularly preferably a C1-C3 hydrocarbon group. When the hydrocarbon group has a carbon number of 10 or smaller, the luminescent material having a terephthalic acid ester structure can be easily dispersed in the interlayer film for laminated glass. The hydrocarbon group is preferably an alkyl group.

Examples of the compound having a structure represented by the formula (1) include diethyl-2, 5-dihydroxyterephthalate and dimethyl 2,5-dihydroxyterephthalate. In particular, for display of higher contrast images, the compound having a structure represented by the formula (1) is preferably diethyl-2,5-dihydroxyterephthalate ("diethyl 2,5-dihydroxyterephthalate", Sigma-Aldrich).

In the formula (2), R² is an organic group, R³ and R⁴ each are a hydrogen atom or an organic group, and y is 1, 2, 3, or 4.

The organic group of R² is preferably a hydrocarbon group, more preferably a C1-C10 hydrocarbon group, still more preferably a C1-C5 hydrocarbon group, particularly preferably a C1-C3 hydrocarbon group. When the hydrocarbon group has a carbon number satisfying the upper limit, the luminescent material having a terephthalic acid ester structure can be easily dispersed in the interlayer film for laminated glass. The hydrocarbon group is preferably an alkyl group.

In the formula (2), NR³R⁴ is an amino group. R³ and R⁴ each are preferably a hydrogen atom. The benzene ring in the compound having a structure represented by the formula (2) may have the amino group (s) at the position (s) of one hydrogen atom, two hydrogen atoms, three hydrogen atoms, or four hydrogen atoms among hydrogen atoms of the benzene ring.

For display of still higher contrast images, the compound having a structure represented by the formula (2) is preferably diethyl-2,5-diaminoterephthalate (Sigma-Aldrich).

The amount of the luminescent material having a terephthalic acid ester structure is not particularly limited, and the lower limit thereof is preferably 0.001 parts by weight and the upper limit thereof is preferably 5 parts by weight based on 100 parts by weight of the thermoplastic resin. When the amount of the luminescent material having a terephthalic acid ester structure is 0.001 parts by weight or more, still higher contrast images can be displayed under irradiation with light. When the amount of the luminescent material having a terephthalic acid ester structure is 5 parts by weight or less, the interlayer film for laminated glass has still higher transparency. More preferably, the lower limit of the amount of the luminescent material having a terephthalic acid ester structure is 0.005 parts by weight, and the upper limit thereof is 2 parts by weight. Still more preferably, the lower limit is 0.01 parts by weight and the upper limit is 1.5 parts by weight. Particularly preferably, the lower limit is 0.1 parts by weight and the upper limit is 1 part by weight.

The luminescent layer contains a benzotriazole ultraviolet absorber. Use of a benzotriazole ultraviolet absorber in an amount within a certain range with the luminescent material having a terephthalic acid ester structure in combination enables inhibition of reduction in the luminance over time while maintaining the initial luminance.

Examples of the benzotriazole ultraviolet absorber include 2,6-di-t-butyl-4-methylphenol, 2-(2H-Benzotriazol-2-yl)-4-(1,1,3,3-tetramethylbutyl)phenol, 2-(2H-Benzotriazol-2-yl)-p-cresol, and 2-(5-chloro-2H-benzotriazol-2-yl) -6-tert-butyl-4-methylphenol.

In the luminescent layer, the lower limit of the amount of the benzotriazole ultraviolet absorber is 0.05 parts by weight and the upper limit thereof is 10 parts by weight based on 1 part by weight of the luminescent material having a terephthalic acid ester structure. When the amount of the benzotriazole ultraviolet absorber is within the range, reduction in the luminance over time can be inhibited while the initial luminance is not reduced. The lower limit of the amount of the benzotriazole ultraviolet absorber is preferably 0.4 parts by weight, and the upper limit thereof is preferably 2 parts by weight.

The luminescent layer preferably contains a HALS compound. When the luminescent layer contains a HALS compound, reduction in the luminance over time can be inhibited while the initial luminance is not reduced.

The HALS compound as used herein refers to a hindered amine light stabilizer, and specific examples thereof include tetrakis(1,2,2,6,6-pentamethyl-4-piperidyl) butane-1,2,3,4-tetracarboxylate, tetrakis(2,2,6,6-tetramethyl-4-piperidyl) butane-1,2,3,4-tetracarboxylate, and bis(1-undecanoxy-2,2,6, 6-tetramethylpiperidin-4-yl) carbonate.

The amount of the HALS compound is not particularly limited. The lower limit of the amount of HALS is 0.05 parts by weight and the upper limit thereof is 5 parts by weight based on 1 part by weight of the luminescent material having a terephthalic acid ester structure.

The luminescent layer preferably contains a potassium salt as an adhesion modifier.

For adjustment of the adhesion between the interlayer film for laminated glass and glass, an interlayer film for laminated glass commonly contains a compound containing a magnesium element as an adhesion modifier. However, use of a luminescent material having a terephthalic acid ester structure and a compound containing a magnesium element in combination may cause discoloration of the interlayer film for laminated glass. In contrast, use of a potassium salt not only facilitates adjustment of the adhesion between a luminescent layer and glass but also inhibits discoloration of the luminescent layer.

The potassium salt is not particularly limited, and is preferably a potassium salt of a C1-C16 organic acid, more preferably a potassium salt of a C2-C16 organic acid, still more preferably a potassium salt of a C1-C16 carboxylic acid, particularly preferably a potassium salt of a C2-C16 carboxylic acid. The potassium salt of a C1-C16 carboxylic acid is not particularly limited, and examples thereof include potassium formate, potassium acetate, potassium propionate, potassium 2-ethylbutanoate, and potassium 2-ethylhexanoate. It may be potassium acetate, potassium propionate, potassium 2-ethylbutanoate, or potassium 2-ethylhexanoate. The C1-C16 carboxylic acid is preferably a carboxylic acid having a carbon number of 12 or smaller, more preferably a carboxylic acid having a carbon number of 10 or smaller, still more preferably a carboxylic acid having a carbon number of 8 or smaller.

The amount of the potassium salt is not particularly limited, and the lower limit thereof is preferably 0.001 parts by weight and the upper limit thereof is preferably 0.5 parts by weight based on 100 parts by weight of the thermoplastic resin. When the amount of the potassium salt is 0.001 parts by weight or more, the laminated glass has higher penetration resistance. When the amount of the potassium salt is 0.5 parts by weight or less, the interlayer film for laminated glass has higher transparency. More preferably, the lower limit of the amount of the potassium salt is 0.015 parts by weight and the upper limit is 0.25 parts by weight. Still more preferably, the lower limit is 0.02 parts by weight and the upper limit is 0.2 parts by weight. Particularly preferably, the lower limit is 0.025 parts by weight and the upper limit is 0.1 parts by weight.

For further effective inhibition of discoloration of the luminescent layer, the amount of the potassium element in the luminescent layer is preferably 400 ppm or less, more preferably 300 ppm or less, still more preferably 250 ppm or less, particularly preferably 200 ppm or less, most preferably 180 ppm or less. For higher moisture resistance of the luminescent layer, the amount of the potassium element in the luminescent layer is most preferably 100 ppm or less. The potassium element may be contained as potassium derived from the potassium salt or potassium derived from a neutralizer used in synthesis of a thermoplastic resin such as a polyvinyl acetal. The lower limit of the amount of the potassium element in the luminescent layer is preferably 30 ppm, more preferably 40 ppm, still more preferably 80 ppm, particularly preferably 120 ppm.

The luminescent layer may contain a magnesium salt as an adhesion modifier as long as the effect of the second aspect of the present invention is not impaired. The magnesium salt contained in the luminescent layer further facilitates control of the adhesion between the luminescent layer and glass. The magnesium salt is not particularly limited, and is preferably a magnesium salt of a C2-C16 organic acid, more preferably a magnesium salt of a C2-C16 carboxylic acid. The magnesium salt of a C2-C16 carboxylic acid is not particularly limited, and examples thereof include magnesium acetate, magnesium propionate, magnesium 2-ethylbutanoate, and magnesium 2-ethyl hexanoate. For further facilitating the control of the adhesion between the luminescent layer and glass, the magnesium salt of a C2-C16 carboxylic acid is preferably magnesium acetate.

The amount of the magnesium salt is not particularly limited, and the lower limit is preferably 0.02 parts by weight and the upper limit is preferably 0.5 parts by weight based on 100 parts by weight of the thermoplastic resin. When the amount of the magnesium salt is 0.02 parts by weight or more, the laminated glass has higher penetration resistance. When the amount of the magnesium salt is 0.5 parts by weight or less, the interlayer film for laminated glass has higher transparency. More preferably, the lower limit of the amount of the magnesium salt is 0.03 parts by weight and the upper limit thereof is 0.2 parts by weight. Still more preferably, the lower limit is 0.04 parts by weight and the upper limit is 0.1 parts by weight.

For further easier control of the adhesion of the interlayer film for laminated glass according to the second aspect of the present invention and further effective inhibition of discoloration, the amount of the magnesium element in the luminescent layer is preferably 80 ppm or less. The magnesium element may be contained as magnesium derived from the magnesium salt and magnesium derived from a neutralizer used in synthesis of a thermoplastic resin such as a polyvinyl acetal. The lower limit of the amount of the magnesium element in the luminescent layer is preferably 0 ppm. More preferably, the upper limit thereof is 75 ppm and the lower limit is 20 ppm. Still more preferably, the upper limit is 70 ppm and the lower limit is 30 ppm. The amounts of the potassium element and the magnesium element can be determined with an ICP emission analyzer ("ICPE-9000", Shimadzu Corporation).

For further effective inhibition of discoloration of the interlayer film for laminated glass, the concentration of the lithium element in the luminescent layer is preferably 25 ppm or lower. The lower limit of the concentration of the lithium element in the luminescent layer is preferably 0 ppm. More preferably, the upper limit thereof is 20 ppm and the lower limit is 1 ppm. Still more preferably, the upper limit thereof is 10 ppm or lower.

The luminescent layer preferably further contains a dispersant. The use of a dispersant can inhibit aggregation of the luminescent material having a terephthalic acid ester structure, leading to further uniform luminescence. The dispersant used may be, for example, a compound having a sulfonic acid structure such as linear alkyl benzene sulfonate; a compound having an ester structure such as diester compounds, ricinoleic acid alkyl esters, phthalic acid esters, adipic acid esters, sebacic acid esters, and phosphoric acid esters; compounds having an ether structure such as polyoxyethylene glycols, polyoxypropylene glycols, and alkyl phenyl-polyoxyethylene-ethers; a compound having a carboxylic acid structure such as polycarboxylic acids; a compound having an amine structure such as laurylamine, dimethyllaurylamine, oleyl propylenediamine, polyoxyethylene secondary amine, polyoxyethylene tertiary amine, and polyoxyethylene diamine; a compound having a polyamine structure such as polyalkylene polyamine alkylene oxide; a compound having an amide structure such as oleic acid diethanolamide and alkanol fatty acid amide; and a compound having a high-molecular-weight amide structure such as polyvinylpyrrolidone and polyester acid amidoamine salt. Also, the dispersant used may be a high-molecular-weight dispersant such as polyoxyethylene alkyl ether phosphoric acid (salt), high-molecular-weight polycarboxylic acids, and condensed ricinoleic acid esters. The high-molecular-weight dispersant is defined as a dispersant having a molecular weight of 10,000 or higher.

When the dispersant is used, the lower limit of the amount of the dispersant is preferably 1 part by weight and the upper limit thereof is preferably 50 parts by weight based on 100 parts by weight of the luminescent material having a terephthalic acid ester structure in the luminescent layer. When the amount of the dispersant is within the above range, the luminescent material having a terephthalic acid ester structure can be uniformly dispersed in the luminescent layer. More preferably, the lower limit of the amount of the dispersant is 3 parts by weight and the upper limit thereof is 30 parts by weight. Still more preferably, the lower limit is 5 parts by weight and the upper limit is 25 parts by weight.

The luminescent layer may further contain a plasticizer, if needed. The plasticizer is not particularly limited, and examples thereof include organic ester plasticizers such as monobasic organic acid esters and polybasic organic acid esters, and phosphoric acid plasticizers such as organophosphate plasticizers and organophosphite plasticizers. The plasticizer is preferably a liquid plasticizer.

The monobasic organic acid esters are not particularly limited, and examples thereof include glycol esters obtained by reacting a glycol (e.g., triethylene glycol, tetraethylene glycol, tripropylene glycol) with a monobasic organic acid (e.g., butyric acid, isobutyric acid, caproic acid, 2-ethylbutyric acid, heptanoic acid, n-octylic acid, 2-ethylhexylic acid, pelargonic acid (n-nonylic acid), decylic acid). In particular, preferred are triethylene glycol dicaproic acid ester, triethylene glycol di-2-ethylbutyric acid ester, triethylene glycol di-n-octylic acid ester, and triethylene glycol di-2-ethylhexanoate.

The polybasic organic acid esters are not particularly limited, and examples thereof include ester compounds of a polybasic organic acid (e.g., adipic acid, sebacic acid, azelaic acid) with a C4-C8 linear or branched alcohol. In particular, preferred are dibutyl sebacic acid ester, dioctyl azelaic acid ester, and dibutyl carbitol adipic acid ester.

The organic ester plasticizers are not particularly limited, and examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexylcyclohexyl adipate, diisononyl adipate, heptylnonyl adipate, dibutyl sebacate, oil-modified sebacic alkyds, mixtures of phosphoric acid esters and adipic acid esters, adipic acid esters, mixed type adipic acid esters prepared from C4-C9 alkyl alcohols and C4-C9 cyclic alcohols, and C6-C8 adipic acid esters such as hexyl adipate.

The organophosphate plasticizer is not particularly limited, and examples thereof include tributoxyethyl phosphate, isodecylphenyl phosphate, and triisopropyl phosphate.

Among the above-mentioned plasticizers, preferred is at least one selected from the group consisting of dihexyl adipate (DHA), triethylene glycol di-2-ethylhexanoate (3GO), tetraethylene glycol di-2-ethylhexanoate (4GO), triethylene glycol di-2-ethylbutyrate (3GH), tetraethylene glycol di-2-ethylbutyrate (4GH), tetraethylene glycol di-n-heptanoate (4G7), and triethylene glycol di-n-heptanoate (3G7).

For less hydrolysis, the plasticizer contains preferably triethylene glycol di-2-ethylhexanoate (3GO), triethylene glycol di-2-ethylbutyrate (3GH), tetraethylene glycol di-2-ethylhexanoate (4GO), or dihexyl adipate (DHA), more preferably tetraethylene glycol di-2-ethylhexanoate (4GO) or triethylene glycol di-2-ethylhexanoate (3GO), still more preferably triethylene glycol di-2-ethylhexanoate.

The amount of the plasticizer in the luminescent layer is not particularly limited. The lower limit thereof is preferably 20 parts by weight and the upper limit thereof is preferably 80 parts by weight based on 100 parts by weight of the thermoplastic resin. When the amount of the plasticizer is 20 parts by weight or more, the interlayer film for laminated glass has a lower melt viscosity, leading to easier formation of the interlayer film for laminated glass. When the amount of the plasticizer is 80 parts by weight or less, the interlayer film for laminated glass has higher transparency. More preferably, the lower limit of the amount of the plasticizer is 30 parts by weight and the upper limit thereof is 70 parts by weight. Still more preferably, the lower limit is 35 parts by weight and the upper limit is 63 parts by weight.

For excellent light resistance, the luminescent layer contains an antioxidant. In particular, as described in the first aspect of the present invention, use of at least one antioxidant selected from the group consisting of phenolic compounds, phosphoric acid compounds, and sulfur compounds enables production of an interlayer film for laminated glass significantly suppressed. In particular phenolic compounds are preferred among the above antioxidants for its higher coloring inhibition.

The antioxidant having a phenol structure is an antioxidant having a phenol skeleton. Examples of the antioxidant having a phenol structure include 2,6-di-t-butyl -p-cresol (BHT), butylated hydroxyanisole (BHA), 2,6-di-t-butyl-4-ethylphenol, stearyl-β-(3,5-di-t-butyl -4-hydroxyphenyl)propionate, 2,2'-methylenebis-(4-methyl -6-butylphenol), 2,2'-methylenebis-(4-ethyl -6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl -4-hydroxyphenyl)propiponate]methane, 1,3,3-tris-(2-methyl-4-hydroxy-5-t-butylphenol)butane, 1,3,5-trimethyl-2,4,6-tris(3,5-di-t-butyl-4-hydroxybenzyl) benzene, and bis (3,3'-t-butylphenol)butyric acid glycol ester, and pentaerythritol tetrakis[3-(3,5-di-tert-butyl-4-hydroxy phenyl)propionate]. These antioxidants may be used alone or in combination of two or more thereof.

Examples of the phosphoric acid compound include tris nonylphenyl phosphite, tridecyl phosphite, phosphite of 2-ethyl-2-butylpropylene glycol and 2,4,6-tri-tert-butylphenol, 9,10-dihydro-9-oxa-10-phosphaphenanthrene-10-oxide, tetra(tridecyl)isopropylidenediphenol diphosphite, and tris[2-tert-butyl-4-(3-tert-hydroxy-5-methylphenylthio)-5-methylphenyl]phosphite.

Examples of the sulfur compound include: dialkyl thiodipropionates such as dilauryl thiodipropionate, dimyristyl thiodipropionate, and distearyl thiodipropionate; and β-alkyl mercaptopropionate esters of polyols such as pentaerythritol tetra(β-dodecyl mercaptopropionate).

In the interlayer film for laminated glass according to the second aspect of the present invention, the lower limit of the amount added of the antioxidant is preferably 0.05 parts by weight and the upper limit thereof is preferably 400 parts by weight based on 1 part by weight of the luminescent material having a terephthalic acid ester structure. When the amount of the antioxidant is within the above range, coloring of the interlayer film for laminated glass can be surely prevented.

The luminescent layer may contain, if needed, conventionally known additives such as light stabilizers, antistatic agents, blue pigments, blue dyes, green pigments, and green dyes.

The luminescent layer may have any thickness, and the lower limit of the thickness is preferably 300 µm and the upper limit thereof is preferably 2000 µm. When the thickness of the luminescent layer is within the above range, the contrast of luminescence is sufficiently high under irradiation with light having a specific wavelength. The lower limit of the thickness of the luminescent layer is more preferably 350 µm, and the upper limit thereof is more preferably 1000 µm.

The luminescent layer may be provided on the entire surface or part of the surface of the interlayer film for laminated glass according to the second aspect of the present invention. The luminescent layer may be provided on the entire surface or part of the surface in the plane direction vertical to the thickness direction of the interlayer film for laminated glass according to the second aspect of the present invention. When the luminescent layer is provided only on a part of the surface, the part serves as a luminescent area and parts other than the part serve as non-luminescent areas. Information can be displayed only in the luminescent area.

In the interlayer film for laminated glass according to the second aspect of the present invention, a first resin layer may be laminated on one surface of the luminescent layer. The first resin layer contains preferably a polyvinyl acetal, more preferably a polyvinyl acetal and a plasticizer, still more preferably a polyvinyl acetal, a plasticizer, and an adhesion modifier. In addition to the luminescent layer and the first resin layer, other layer (s) may be further laminated. Examples of the other layer(s) include layers containing thermoplastic resins such as polyethylene terephthalate and polyvinyl acetals. The other layer(s) may be a UV shielding layer containing an ultraviolet absorber. As the ultraviolet absorber contained in the UV-shielding layer, the ultraviolet absorber contained in the luminescent layer may be used.

As the polyvinyl acetal contained in the first resin layer, the polyvinyl acetal contained in the luminescent layer may be used. The polyvinyl acetal contained in the first resin layer may be the same as or different from the polyvinyl acetal contained in the luminescent layer. The plasticizer contained in the first resin layer may be, when the luminescent layer contains a plasticizer, the same as or different from the plasticizer contained in the luminescent layer.

The first resin layer preferably contains an adhesion modifier. The adhesion modifier is not particularly limited, and is preferably a metal salt. The adhesion modifier is at least one metal salt selected from the group consisting of alkali metal salts, alkaline earth metal salts, and magnesium salts. The metal salt preferably contains at least one metal selected from potassium and magnesium. The metal salt is more preferably an alkali metal salt of a C2-C16 organic acid or an alkaline earth metal salt of a C2-C16 organic acid, still more preferably a magnesium salt of a C2-C16 carboxylic acid or a potassium salt of a C2-C16 carboxylic acid. The magnesium salt of a C2-C16 carboxylic acid and the potassium salt of a C2-C16 carboxylic acid are not particularly limited, and examples thereof include magnesium acetate, potassium acetate, magnesium propionate, potassium propionate, magnesium 2-ethylbutanoate, potassium 2-ethylbutanoate, magnesium 2-ethylhexanoate, and potassium 2-ethylhexanoate.

The amount of the adhesion modifier is not particularly limited, and the lower limit thereof is preferably 0.0005 parts by weight and the upper limit thereof is preferably 0.05 parts by weight based on 100 parts by weight of the polyvinyl acetal. When the amount of the adhesion modifier is 0.0005 parts by weight or more, the laminated glass has higher penetration resistance. When the amount of the adhesion modifier is 0.05 parts by weight or less, the interlayer film for laminated glass has higher transparency. More preferably, the lower limit of the amount of the adhesion modifier is 0.002 parts by weight and the upper limit thereof is 0.02 parts by weight.

For higher moisture resistance of the first resin layer, the total amount of the alkali metal, the alkaline earth metal, and the magnesium in the first resin layer is preferably 300 ppm or less. The alkali metal, the alkaline earth metal, and the magnesium may be contained as a metal derived from the adhesion modifier or a metal derived from a neutralizer used in synthesis of the polyvinyl acetal. The total amount of the alkali metal, the alkaline earth metal, and the magnesium in the first resin layer is more preferably 200 ppm or less, still more preferably 150 ppm or less, particularly preferably 100 ppm or less.

When the interlayer film for laminated glass according to the second aspect of the present invention is required to have heat insulation properties, either one or both of the luminescent layer and the first resin layer may contain a heat ray absorber. Alternatively, a heat ray shielding layer containing a heat ray absorber may be further laminated, in addition to the luminescent layer and the first resin layer.

The heat ray absorber is not particularly limited as long as it can shield infrared rays, and is preferably at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

The interlayer film for laminated glass according to the second aspect of the present invention may further have a sound insulation layer with an aim of improving the sound insulation properties. One of the luminescent layer and the first resin layer may be imparted with sound insulation properties to serve as a sound insulation layer. Alternatively, a sound insulation layer may be further laminated, in addition to the luminescent layer and the first resin layer.

The sound insulation layer is, for example, a layer containing the plasticizer in an amount of 50 to 80 parts by weight based on 100 parts by weight of the thermoplastic resin. The sound insulation layer contains preferably a polyvinyl acetal, more preferably polyvinyl butyral. The polyvinyl acetal contained in the sound insulation layer preferably has a hydroxy group content within a range of 20 to 28 mol%. The polyvinyl acetal contained in the sound insulation layer may be polyvinyl acetal A having an acetyl group content of 8 to 30 mol%, polyvinyl acetal B having an acetyl group content of more than 0 mol% but less than 5 mol% and having a degree of acetalization of 70 to 85 mol%, or polyvinyl acetal C having an acetyl group content of 5 mol% or more but less than 8 mol% and having a degree of acetalization of 65 to 80 mol%.

The interlayer film for laminated glass according to the second aspect of the present invention preferably includes the luminescent layer (surface layer), the first resin layer (intermediate layer), and the luminescent layer (surface layer) laminated in the stated order. When the luminescent, layer is used as a surface layer of the interlayer film for laminated glass, the obtained interlayer film for laminated glass enables display of high contrast images and control of the adhesion while inhibiting discoloration. In addition, when the first resin layer is imparted with sound insulation properties, the interlayer film for laminated glass has higher sound insulation properties.

With an aim of imparting the sound insulation properties to the interlayer film for laminated glass according to the second aspect of the present invention, the amount (hereafter, also referred to as amount X) of the plasticizer contained in the first resin layer based on 100 parts by weight of the thermoplastic resin contained in the first resin layer is preferably larger than the amount (hereafter, also referred to as amount Y) of the plasticizer contained in the luminescent layer based on 100 parts by weight of the thermoplastic resin contained in the luminescent layer. The amount X is larger than the amount Y preferably by 5 parts by weight or more, more preferably by 10 parts by weight or more, still more preferably by 15 parts by weight or more. For higher penetration resistance of the interlayer film for laminated glass, the amount X and the amount Y have a difference of preferably 50 parts by weight or less, more preferably 40 parts by weight or less, still more preferably 35 parts by weight or less. The difference between the amount X and the amount Y is calculated based on the equation: (Difference between the amount X and the amount Y) = (The amount X - the amount Y).

When the luminescent layer and the first resin layer each contain the polyvinyl acetal and the plasticizer and the luminescent layer is laminated on one surface of the first resin layer and on the other surface opposite to the one surface of the first resin layer, the polyvinyl acetal contained in the first resin layer preferably has a hydroxy group content (hereafter, also referred to as hydroxy group content X) smaller than the hydroxy group content (hereafter, also referred to as hydroxy group content Y) of the polyvinyl acetal contained in the luminescent layer. When the hydroxy group content X is smaller than the hydroxy group content Y, migration of the plasticizer contained in the first resin layer to the luminescent layer can be inhibited. As a result, the interlayer film for laminated glass has higher sound insulation properties.

The hydroxy group content X is smaller than the hydroxy group content Y more preferably by 1 mol% or more, still more preferably by 3 mol% or more, particularly preferably by 5 mol% or more. For facilitation of formation of the interlayer film for laminated glass, the upper limit of the difference between the hydroxy group content X and the hydroxy group content Y is preferably 20 mol%, more preferably 15 mol%, still more preferably 12 mol%, particularly preferably 10 mol%. The difference between the hydroxy group content X and the hydroxy group content Y is calculated based on the equation: (Difference between the hydroxy group content X and the hydroxy group content Y) = (The hydroxy group content Y - the hydroxy group content X).

For the purpose of inhibiting migration of the plasticizer from the first resin layer to the luminescent layer or migration of the luminescent material having a terephthalic acid ester structure from the luminescent layer to the first resin layer, a layer for inhibiting the migration of the plasticizer or the luminescent material having a terephthalic acid ester structure may be provided between the luminescent layer and the first resin layer. Examples of the layer for inhibiting the migration include a resin layer containing a polyalkylene terephthalate such as polyethylene terephthalate.

The lower limit of the hydroxy group content X is preferably 10 mol%, more preferably 15 mol%, still more preferably 18 mol%, particularly preferably 20 mol%. The upper limit of the hydroxy group content X is preferably 32 mol%, more preferably 30 mol%, still more preferably 28 mol%, particularly preferably 25 mol%. When the hydroxy group content X satisfies the lower limit, the interlayer film for laminated glass has higher penetration resistance. When the hydroxy group content X satisfies the upper limit, formation of the first resin layer is facilitated. The lower limit of the hydroxy group content Y is preferably 26 mol%, more preferably 28 mol%, still more preferably 30 mol%. The upper limit thereof is preferably 40 mol%, more preferably 36 mol%, still more preferably 34 mol%, particularly preferably 32 mol%. When the hydroxy group content Y satisfies the lower limit, the interlayer film for laminated glass has higher penetration resistance. When the hydroxy group content Y satisfies the upper limit, formation of the luminescent layer is facilitated.

The interlayer film for laminated glass according to the second aspect of the present invention may be produced by any method. For example, the interlayer film for laminated glass may be produced using a resin composition containing the thermoplastic resin and a plasticizer solution that is prepared by mixing the plasticizer, the luminescent material having a terephthalic acid ester structure, and the benzotriazole ultraviolet absorber. The interlayer film for laminated glass is preferably produced by mixing the obtained resin composition well in an extruder and extruding the composition therefrom. For another example, a multilayer interlayer film having a luminescent layer, a first resin layer, and a luminescent layer may be produced by co-extruding a resin composition containing the thermoplastic resin and a plasticizer solution that is prepared by mixing the plasticizer, the luminescent material having a terephthalic acid ester structure, and the benzotriazole ultraviolet absorber with a resin composition containing the thermoplastic resin and the plasticizer.

The interlayer film for laminated glass according to the second aspect of the present invention includes the luminescent layer, and therefore becomes luminous under irradiation with light having a specific wavelength. Such properties enable display of information at a high luminance.

Examples of a device for irradiation with light having a specific wavelength include a spot light source (LC-8, Hamamatsu Photonics K.K.), a xenon flash lamp (CW lamp, Heraeus Holding), and a black light (Carry Hand, Iuchi Seieido Co., Ltd.) .

The second aspect of the present invention also encompasses a laminated glass including a pair of glass sheets and the interlayer film for laminated glass according to the second aspect of the present invention provided between the pair of glass sheets.

The glass sheets may be commonly used transparent plate glass. Examples thereof include inorganic glass such as float plate glass, polished plate glass, molded plate glass, wired glass, wire-reinforced plate glass, colored plate glass, heat-absorbing glass, heat-reflecting glass, and green glass. Also usable is UV light-shielding glass in which a UV light-shielding coating is formed on the surface of glass. However, such glass is preferably used as a glass sheets on a side opposite to the side irradiated with light having a specific wavelength. Moreover, organic plastic sheets such as polyethylene terephthalate, polycarbonate, or polyacrylate sheets may also be used.

As the glass sheets, two or more kinds of glass sheets may be used. Exemplary cases thereof include a laminated glass in which the interlayer film for laminated glass according to the second aspect of the present invention is sandwiched between a transparent float plate glass and a colored glass sheet such as green glass . Moreover, as the glass sheets, two or more kinds of glass sheets different in the thickness may be used.

### - Advantageous Effects of Invention

According to the first aspect of the present invention, an interlayer film for laminated glass, an interlayer film for luminescent laminated glass, and a laminated glass including the interlayer film for laminated glass which are significantly suppressed while containing an aromatic compound such as a salicylic acid compound or a benzophenone compound can be provided.

According to the second aspect of the present invention, an interlayer film for laminated glass which enables display of high luminance images under irradiation with light and inhibits reduction in the luminance of images even after use for a long period of time, and a laminated glass including the interlayer film for laminated glass can be provided.

### DESCRIPTION OF EMBODIMENTS

The first aspect of the present invention is specifically described in the following with reference to, but not limited to, examples.

### (Example 1)

An amount of 100 parts by weight of polyvinyl butyral resin (polyvinyl butyral resin acetalized by n-butyraldehyde, average degree of polymerization: 1700, hydroxy group content: 29.5 mol%, degree of acetylation: 0.7 mol%, degree of butyralization: 68.5 mol%) was blended with 0.5 parts by weight of diethyl 2,5-dihydroxyterephthalate (Sigma-Aldrich) as an aromatic compound having a structure capable of coordinating with a metal, 0.1 parts by weight of 2, 6-di-tert-butyl-p-cresol as an antioxidant, 0.2 parts by weight of 2-[2-hydroxy-3,5-bis(a,a-dimethyl benzyl)phenyl]-2H-benzotriazole as an ultraviolet absorber, 40 parts by weight of triethylene glycol di-2-ethylhexanoate (3GO) as a plasticizer, and aqueous solution of potassium formate (Wako Pure Chemical Industries, Ltd) (potassium concentration of the aqueous solution: 3.65% by weight) as an adhesion modifier in an amount that the interlayer film for laminated glass has a potassium concentration of 150 ppm. The mixture was well kneaded with a mixing roll to give a resin composition.

The obtained resin composition was extruded from an extruder to give a monolayer interlayer film for laminated glass having an average thickness of 0.76 mm.

A transparent float plate glass (thickness: 2.5 mm, size: 100 mm × 100 mm), the produced interlayer film for laminated glass (average thickness: 0.76 mm), and a transparent float plate glass (thickness: 2.5 mm) were laminated in the stated order and fixed with a heat-resistant tape so as not to be dislocated.

The obtained laminate was placed in a vacuum bag, and the vacuum bag was deaerated at room temperature (25°C) and at a degree of reduced pressure of 933.2 hPa. Next, the vacuum bag was heated to 100°C while the deaeration state was maintained, and held for 20 minutes after the temperature reached 100°C. Then, the vacuum bag was naturally cooled. When the temperature was confirmed to be lowered to 30°C, the pressure was released to atmospheric pressure.

The temporarily bonded laminated glass obtained by the above method was pressure-bonded in an autoclave at 135°C and a pressure of 1.2 MPa for 20 minutes to give a laminated glass.

### (Examples 2 to 19, Comparative Example 1)

Interlayer films for laminated glass and laminated glasses were produced in the same manner as in Example 1, except that the amounts added of the aromatic compound having a structure capable of coordinating with a metal and the antioxidant were set as shown in Tables 1 and 2.

The antioxidant used in Comparative Example 1 was IRGANOX L57 (octyl/butyldiphenyl amine, Ciba Specialty Chemicals).

### (Evaluation)

The laminated glasses obtained in the examples and the comparative example were evaluated by the following methods. Tables 1 and 2 show the results.

### (1) Yellow index

The initial yellow index of each obtained laminated glass was measured using a recording spectrophotometer (U4100, Hitachi, Ltd.) in conformity with JIS K 7373 (2006). Each obtained laminated glass was left at a temperature of 100°C for 336 hours. The yellow index after heating of the heated laminated glass was measured using a recording spectrophotometer (U4100, Hitachi, Ltd.) in conformity with JIS K 7373 (2006).

Based on the obtained yellow indexes, the difference in the yellow index (= (yellow index after heating) - (initial yellow index)) was calculated. The case where the difference in the yellow index was smaller than 15 was rated "Good (o) ", and the case where the difference was 15 or larger was rated "Poor (×)".

### (2) Visible light transmittance

The transmittance of each obtained laminated glass was measured using a recording spectrophotometer (U4100, Hitachi, Ltd.) within a range of 300 to 2500 nm and the visible light transmittance within a range of 380 to 780 nm was calculated in conformity with JIS R 3211 (1998).

### (3) Pummel value

Each obtained laminated glass was allowed to stand at a temperature of -18°C ± 0.6°C for 16 hours, and the central portion of the resulting laminated glass was hit with a hammer (head weight of 0.45 kg) until the shattered glass had a particle size of 6 mm or smaller. The degree of exposure of the film after the glass partially fell off was measured, and the Pummel value was determined based on Table 3. The case where the obtained Pummel value was 2 to 7 was rated "Good (∘)". The case where the obtained Pummel value was 0, 1, or 8 was rated "Poor (×)".

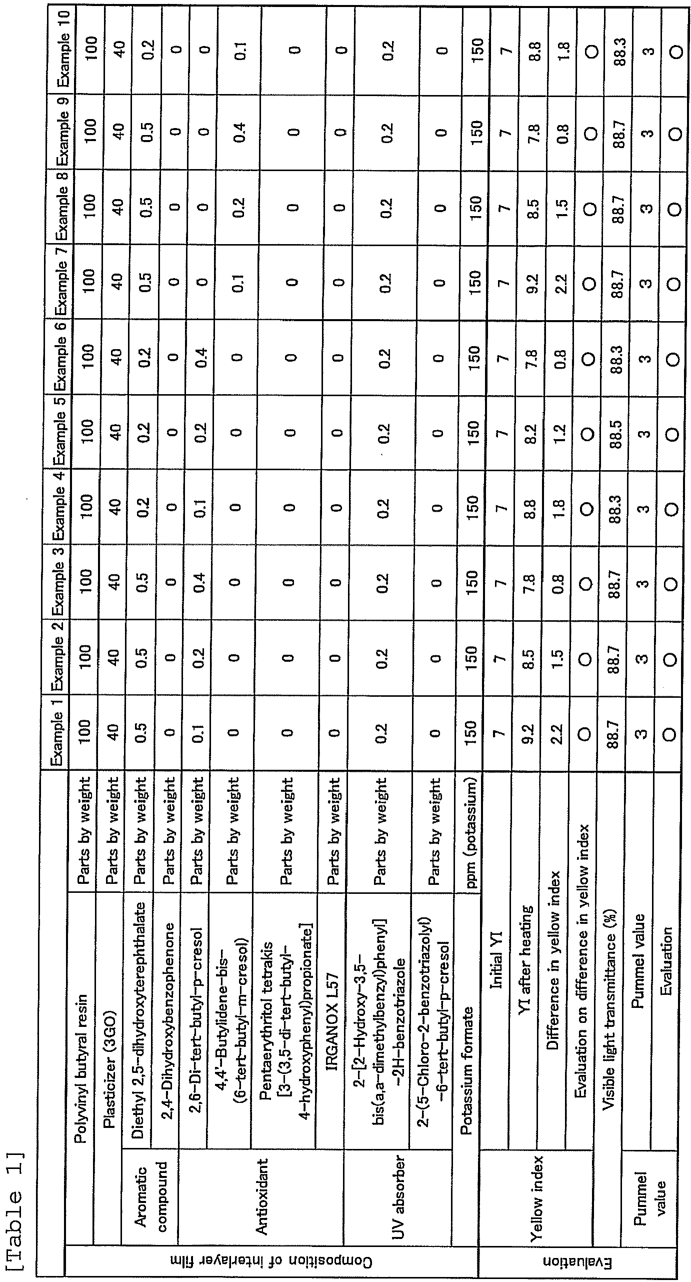

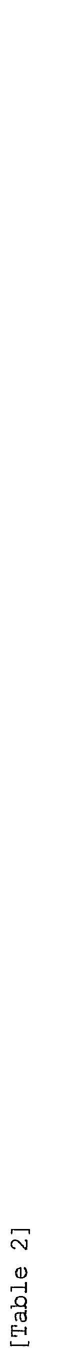

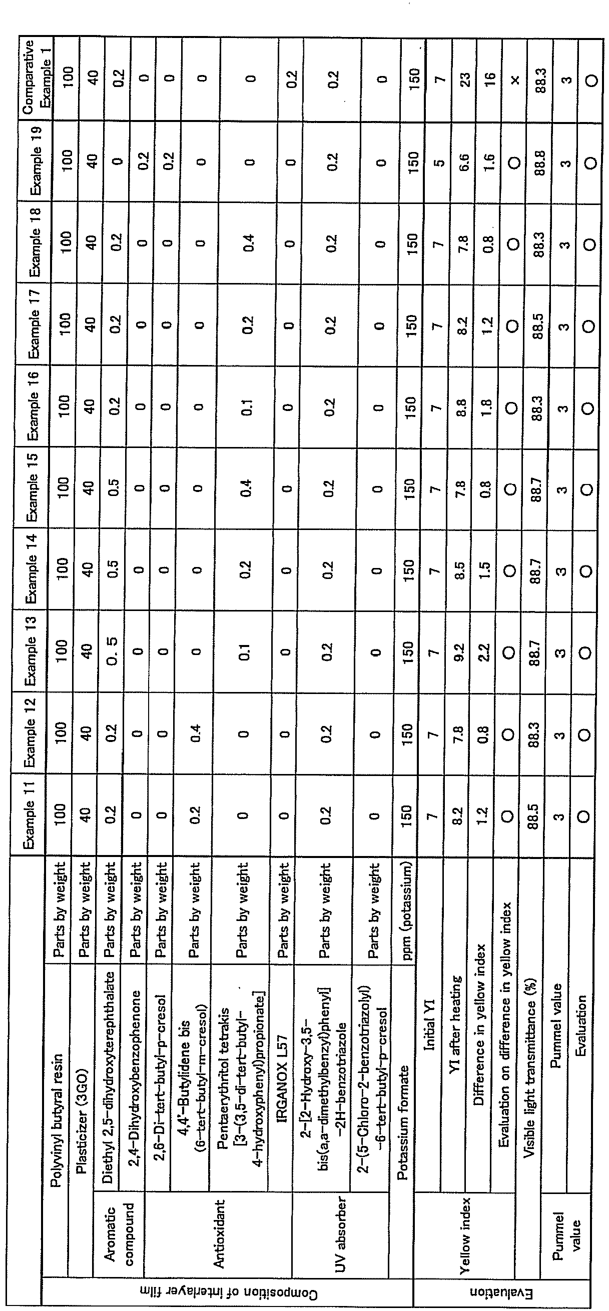

**[Table 3]**

| Degree of exposure of interlayer film (area%) | Pummel value |
|---|---|
| 90 < Degree of exposure ≤ 100 | 0 |
| 85 < Degree of exposure ≤ 90 | 1 |
| 60 < Degree of exposure ≤ 85 | 2 |
| 40 < Degree of exposure ≤ 60 | 3 |
| 20 < Degree of exposure < 40 | 4 |
| 10 < Degree of exposure ≤ 20 | 5 |
| 5 < Degree of exposure ≤ 10 | 6 |
| 2 < Degree of exposure ≤ 5 | 7 |
| Degree of exposure ≤ 2 | 8 |

### (Example 20)

An amount of 100 parts by weight of polyvinyl butyral resin (polyvinyl butyral resin acetalized by n-butyraldehyde, average degree of polymerization: 1700, hydroxy group content: 30.8 mol%, degree of acetylation: 0.7 mol%, degree of butyralization: 68.5 mol%) was blended with 0.5 parts by weight of diethyl 2,5-dihydroxyterephthalate (Sigma Aldrich) as a luminescent material, 0.2 parts by weight of 2-[2-hydroxy -3,5-bis(a,a-dimethylbenzyl)phenyl]-2H-benzotriazole as a ultraviolet absorber, 0.2 parts by weight of 2, 6-di-tert-butyl -p-cresol as an antioxidant, 40 parts by weight of triethylene glycol di-2-ethylhexanoate (3GO) as a plasticizer, and potassium formate (Wako Pure Chemical Industries, Ltd ) as an adhesion modifier in an amount that the potassium concentration reached 150 ppm. The mixture was kneaded well with a mixing roll to give a resin composition.

The obtained resin composition was extruded from an extruder to give a monolayer interlayer film for laminated glass having an average thickness of 0.76 mm.

A transparent float plate glass (thickness: 2.5 mm), the interlayer film for laminated glass, and a transparent float plate glass (thickness: 2.5 mm) were laminated in the stated order and fixed with a heat-resistant tape so as not to be dislocated.

The obtained laminate was placed in a vacuum bag, and the vacuum bag was deaerated at room temperature (25°C) and at a degree of reduced pressure of 933.2 hPa. Next, the vacuum bag was heated to 100°C while the deaeration state was maintained, and held for 20 minutes after the temperature reached 100°C. Then, the vacuum bag was naturally cooled. When the temperature was confirmed to be lowered to 30°C, the pressure was released to atmospheric pressure.

The temporarily bonded laminated glass obtained by the above method was pressure-bonded in an autoclave at 135°C and a pressure of 1.2 MPa for 20 minutes to give a laminated glass.

It is to be noted that two laminated glasses different in size were produced for the following evaluation tests, and one had a size of 150 mm in length × 150 mm in width and the other had a size of 50 mm in length × 50 mm in width.

### (Examples 21 to 35, Comparative Examples 2, 3)

Interlayer films for laminated glass and laminated glasses were produced in the same manner as in Example 20, except that the amounts added of the luminescent material and the ultraviolet absorber were set as shown in Tables 4 and 5.

### (Evaluation)

The laminated glasses obtained in the examples and the comparative examples were evaluated by the following methods. Tables 4 and 5 show the results.

### (1) Luminance

Each obtained laminated glass having a size of 50 mm in length × 50 mm in width was placed in a dark room, and the entire surface thereof was irradiated with light from a high power xenon light source ("REX-250", Asahi Spectra Co., Ltd, irradiation wavelength: 405 nm) set at a position of 10 cm distant from the plane of the laminated glass in the vertical direction. The luminance was measured with a luminance meter ("SR-3AR", Topcon Technohouse Corporation) set at a position at an angle of 45 degrees relative to the plane of the irradiated laminated glass at a distance of 35 cm from the plane of the laminated glass and on the side under irradiation with light.

The case where the obtained luminance was 200 cd/m² or higher was rated "Good (○)". The case where the luminance was lower than 200 cd/m² was rated "Poor (×)".

Each obtained laminated glass having a size of 50 mm × 50 mm was irradiated with UV light from a JIS-UV tester (750W, light source: quartz mercury lamp) for 1000 hours.

After UV irradiation, the luminance was determined in the same manner as in the evaluation method of the initial luminance.

The proportion of the luminance after UV irradiation to the initial luminance (luminance after UV irradiation/initial luminance × 100) was calculated. The case where the proportion was 50% or higher was rated "Good (∘)". The case where the proportion was lower than 50% was rated "Poor (x)".

### (2) Visible light transmittance

The transmittance of each obtained laminated glass having a size of 50 mm in length × 50 mm in width was measured using a recording spectrophotometer (U4100, Hitachi, Ltd.) within a range of 300 to 2500 nm and the visible light transmittance within a range of 380 to 780 nm was calculated in conformity with JIS R 3211 (1998).

### (3) Pummel value

Each obtained laminated glass having a size of 150 mm in length × 150 mm in width was allowed to stand at a temperature of -18°C ± 0.6°C for 16 hours, and the central portion of the resulting laminated glass was hit with a hammer (head weight of 0.45 kg) until the shattered glass had a particle size of 6 mm or smaller. The degree of exposure of the film after the glass partially fell off was measured, and the Pummel value was determined based on Table 6. The case where the obtained Pummel value was 2 to 7 was rated "Good (∘)". The case where the obtained Pummel value was 0, 1, or 8 was rated "Poor (×)".

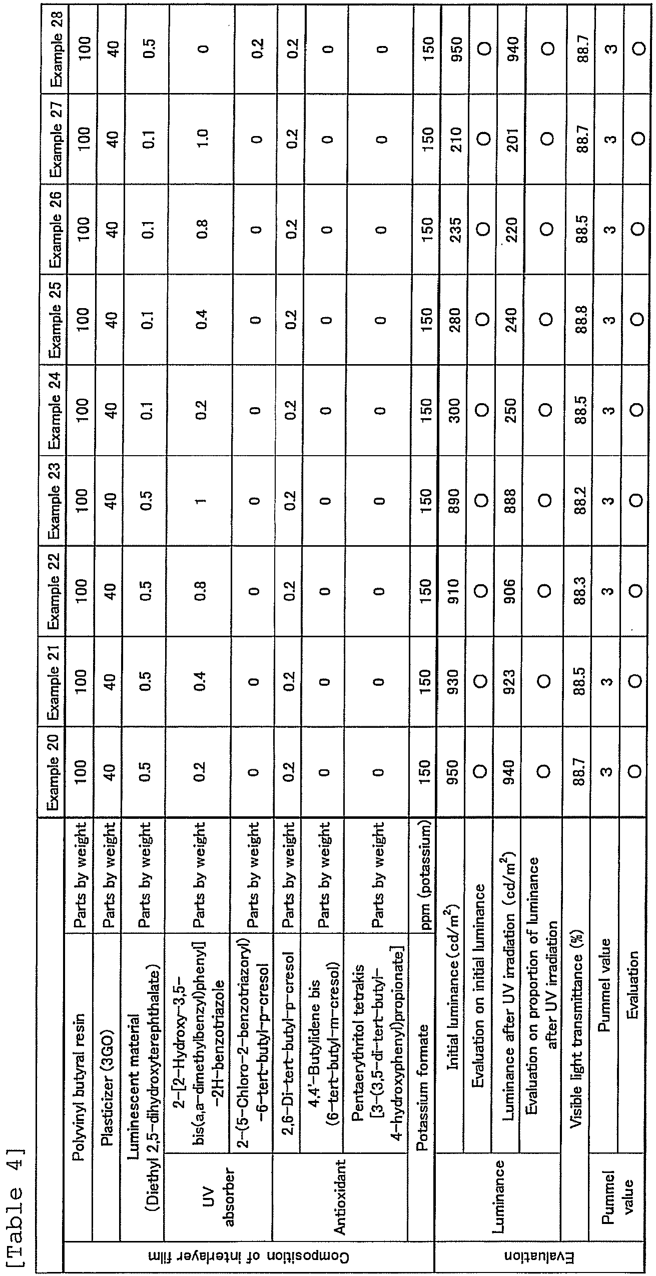

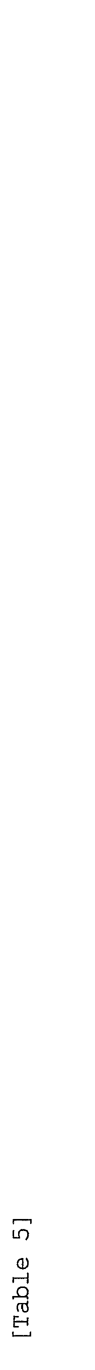

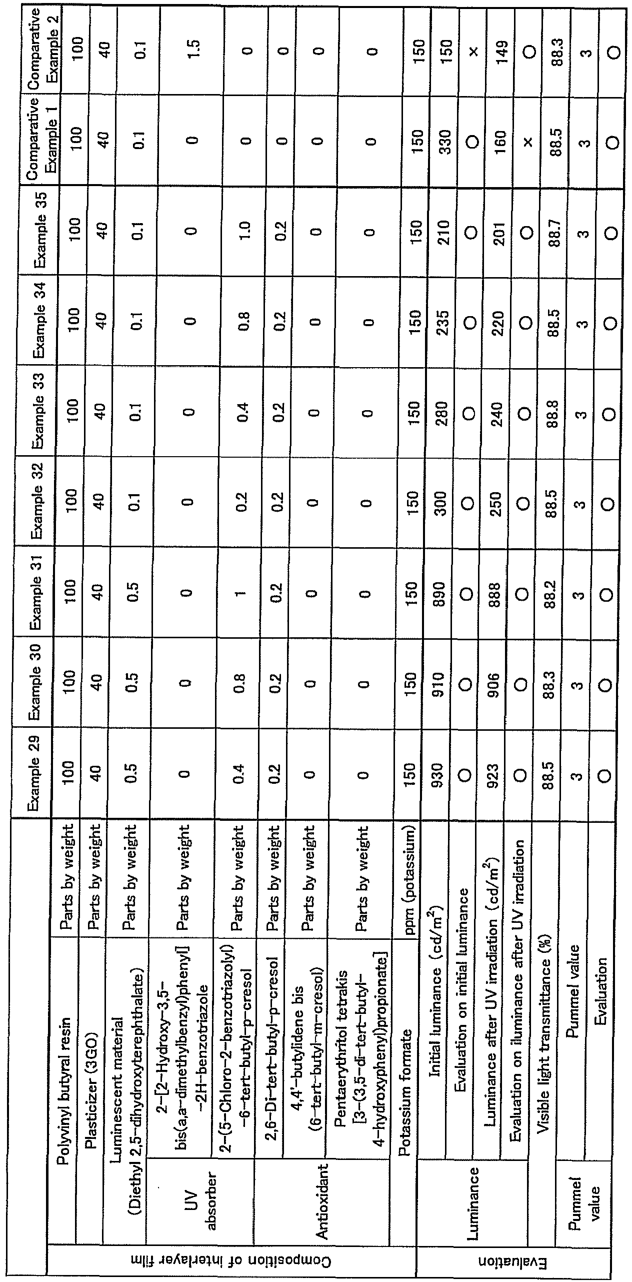

**[Table 6]**

| Degree of exposure of interlayer film (area%) | Pummel value |
|---|---|
| 90 < Degree of exposure ≤ 100 | 0 |
| 85 < Degree of exposure ≤ 90 | 1 |
| 60 < Degree of exposure ≤ 85 | 2 |
| 40 < Degree of exposure ≤ 60 | 3 |
| 20 < Degree of exposure ≤ 40 | 4 |
| 10 < Degree of exposure ≤ 20 | 5 |
| 5 < Degree of exposure ≤ 10 | 6 |
| 2 < Degree of exposure ≤ 5 | 7 |
| Degree of exposure ≤ 2 | 8 |

### INDUSTRIAL APPLICABILITY

According to the first aspect of the present invention, an interlayer film for laminated glass, an interlayer film for luminescent laminated glass, and a laminated glass including the interlayer film for laminated glass which are significantly suppressed while containing an aromatic compound such as a salicylic acid compound or a benzophenone compound can be provided.

## Claims

1. An interlayer film for laminated glass comprising:
a thermoplastic resin;
an aromatic compound that has a structure capable of coordinating with a metal;
an antioxidant;
an ultraviolet absorber having a benzotriazole structure; and
a potassium salt,
the aromatic compound being at least one of a compound having a structure represented by the formula (1) shown below and a compound having a structure represented by the formula (2) shown below,
the antioxidant being at least one antioxidant selected from the group consisting of a phenolic compound, a phosphoric acid compound, and a sulfur compound,
the formulae (1) and (2) being: 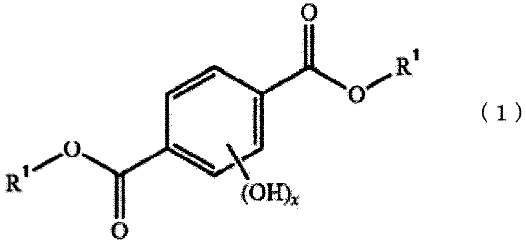 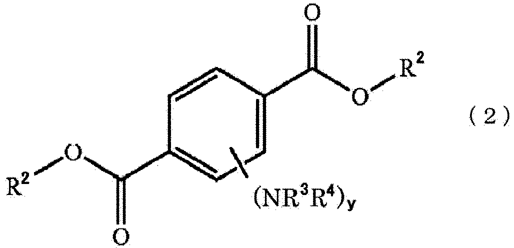
R¹ representing an organic group, x being 1, 2, 3, or 4 in the formula (1),
R² representing an organic group, R³ and R⁴ each representing a hydrogen atom or an organic group, y being 1, 2, 3, or 4 in the formula (2).

2. The interlayer film for laminated glass according to claim 1,
which contains the aromatic compound that has a structure capable of coordinating with a metal in an amount of 0.001 to 10 parts by weight based on 100 parts by weight of the thermoplastic resin.

3. The interlayer film for laminated glass according to claim 1 or 2,
wherein the amount of the antioxidant is 0.05 to 400 parts by weight based on 1 part by weight of the aromatic compound that has a structure capable of coordinating with a metal.

4. A laminated glass comprising:
a pair of glass sheets; and
the interlayer film for laminated glass according to claim 1, 2, or 3, interposed between the pair of glass sheets.

5. An interlayer film for laminated glass comprising
a luminescent layer that contains a thermoplastic resin, a luminescent material having a terephthalic acid ester structure, a benzotriazole ultraviolet absorber, and an antioxidant,
the luminescent layer containing the benzotriazole ultraviolet absorber in an amount of 0.05 to 10 parts by weight based on 1 part by weight of the luminescent material having a terephthalic acid ester structure,
wherein the antioxidant is at least one antioxidant selected from the group consisting of a phenolic compound, a phosphoric acid compound, and a sulfur compound.

6. The interlayer film for laminated glass according to claim 5,
wherein the amount of the benzotriazole ultraviolet absorber is 0.4 to 2 parts by weight based on 1 part by weight of the luminescent material having a terephthalic acid ester structure in the luminescent layer.

7. A laminated glass comprising:
a pair of glass sheets; and
the interlayer film for laminated glass according to claim 5 or 6 interposed between the pair of glass sheets.

## Patentansprüche

1. Zwischenschichtfolie für Verbundglas, umfassend:
ein thermoplastisches Harz,
eine aromatische Verbindung, die eine Struktur aufweist, die zum Koordinieren mit einem Metall fähig ist,
ein Antioxidans,
einen Ultraviolettabsorber, der eine Benzotriazolstruktur aufweist, und
ein Kaliumsalz,
wobei die aromatische Verbindung mindestens eine von einer Verbindung, die eine Struktur aufweist, die durch die unten gezeigte Formel (1) dargestellt ist, und einer Verbindung ist, die eine Struktur aufweist, die durch die unten gezeigte Formel (2) dargestellt ist,
wobei das Antioxidans mindestens ein Antioxidans ist, das aus der Gruppe ausgewählt ist, bestehend aus einer Phenolverbindung, einer Phosphorsäureverbindung und einer Schwefelverbindung,
wobei die Formeln (1) und (2) sind: 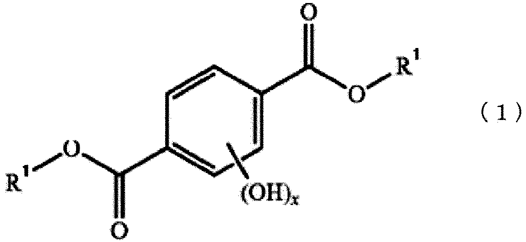 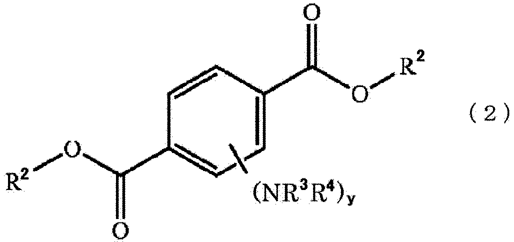 wobei R¹ eine organische Gruppe darstellt, x für 1, 2, 3 oder 4 in der Formel (1) steht,
wobei R² eine organische Gruppe darstellt, R³ und R⁴ jeweils ein Wasserstoffatom oder eine organische Gruppe darstellen, y für 1, 2, 3 oder 4 in der Formel (2) steht.

2. Zwischenschichtfolie für Verbundglas gemäß Anspruch 1,
welche die aromatische Verbindung enthält, die eine Struktur aufweist, die zum Koordinieren mit einem Metall in einer Menge von 0,001 bis 10 Gewichtsteilen basierend auf 100 Gewichtsteilen des thermoplastischen Harzes fähig ist.

3. Zwischenschichtfolie für Verbundglas gemäß Anspruch 1 oder 2,
wobei die Menge des Antioxidans 0,05 bis 400 Gewichtsteile basierend auf 1 Gewichtsteil der aromatischen Verbindung beträgt, die eine Struktur aufweist, die zum Koordinieren mit einem Metall fähig ist.

4. Verbundglas, umfassend:
ein Paar Glasplatten und
die Zwischenschichtfolie für Verbundglas gemäß Anspruch 1, 2 oder 3, die zwischen dem Paar Glasplatten liegt.

5. Zwischenschichtfolie für Verbundglas, umfassend
eine lumineszierende Schicht, die ein thermoplastisches Harz, ein lumineszierendes Material, das eine Terephthalsäureesterstruktur aufweist, einen Benzotriazolultraviolettabsorber und ein Antioxidans enthält,
wobei die lumineszierende Schicht den Benzotriazolultraviolettabsorber in einer Menge von 0,05 bis 10 Gewichtsteilen basierend auf 1 Gewichtsteil des lumineszierenden Materials enthält, das eine Terephthalsäureesterstruktur aufweist,
wobei das Antioxidans mindestens ein Antioxidans ist, das aus der Gruppe ausgewählt ist, bestehend aus einer Phenolverbindung, einer Phosphorsäureverbindung und einer Schwefelverbindung.

6. Zwischenschichtfolie für Verbundglas gemäß Anspruch 5,
wobei die Menge des Benzotriazolultraviolettabsorbers 0,4 bis 2 Gewichtsteile basierend auf 1 Gewichtsteil des lumineszierenden Materials beträgt, das eine Terephthalsäureesterstruktur in der lumineszierenden Schicht aufweist.

7. Verbundglas, umfassend:
ein Paar Glasplatten und
die Zwischenschichtfolie für Verbundglas gemäß Anspruch 5 oder 6, die zwischen dem Paar Glasplatten liegt.

## Revendications

1. Film de couche intermédiaire pour verre feuilleté comprenant :
une résine thermoplastique ;
un composé aromatique qui a une structure capable de coordination avec un métal ;
un antioxydant ;
un absorbant d'ultraviolets ayant une structure de benzotriazole ; et
un sel de potassium,
le composé aromatique étant au moins un d'un composé ayant une structure représentée par la formule (1) représentée ci-dessous et d'un composé ayant une structure représentée par la formule (2) présentée ci-dessous,
l'antioxydant étant au moins un antioxydant choisi dans le groupe consistant en un composé phénolique, un composé d'acide phosphorique, et un composé de soufre,
les formules (1) et (2) étant : 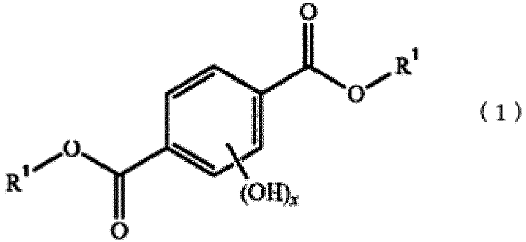 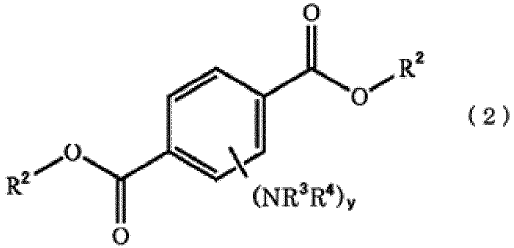
R¹ représentant un groupe organique, x étant égal à 1, 2, 3 ou 4 dans la formule (1),
R² représentant un groupe organique, R³ et R⁴ représentant chacun un atome d'hydrogène ou un groupe organique, y étant égal à 1, 2, 3, ou 4 dans la formule (2).

2. Film de couche intermédiaire pour verre feuilleté selon la revendication 1,
qui contient le composé aromatique qui présente une structure capable de coordination avec un métal dans une quantité de 0,001 à 10 parties en masse sur la base de 100 parties en masse de la résine thermoplastique.

3. Film de couche intermédiaire pour verre feuilleté selon la revendication 1 ou 2,
dans lequel la quantité de l'antioxydant est de 0,05 à 400 parties en masse sur la base de 1 partie en masse du composé aromatique qui a une structure capable de coordination avec un métal.

4. Verre feuilleté comprenant :
une paire de feuilles de verre ; et
le film de couche intermédiaire pour verre feuilleté selon la revendication 1, 2, ou 3, intercalé entre la paire de feuilles de verre.

5. Film de couche intermédiaire pour verre feuilleté comprenant
une couche luminescente qui contient une résine thermoplastique, un matériau luminescent ayant une structure d'ester d'acide téréphtalique, un absorbant d'ultraviolets de benzotriazole, et un antioxydant,
la couche luminescente contenant l'absorbant d'ultraviolets de benzotriazole dans une quantité de 0,05 à 10 parties en masse sur la base de 1 partie en masse du matériau luminescent ayant une structure d'ester d'acide téréphtalique,
dans lequel l'antioxydant est au moins un antioxydant choisi dans le groupe consistant en un composé phénolique, un composé d'acide phosphorique, et un composé de soufre.

6. Film de couche intermédiaire pour verre feuilleté selon la revendication 5,
dans lequel la quantité de l'absorbant d'ultraviolets de benzotriazole est de 0,4 à 2 parties en masse sur la base de 1 partie en masse du matériau luminescent ayant une structure d'ester d'acide téréphtalique dans la couche luminescente.

7. Verre feuilleté comprenant :
une paire de feuilles de verre ; et
le film de couche intermédiaire pour verre feuilleté selon la revendication 5 ou 6 intercalé entre la paire de feuilles de verre.
